# EUROPÄISCHE PATENTSCHRIFT

(11) **EP 2 831 986 B1**
(45) Veröffentlichungstag und Bekanntmachung des Hinweises auf die Patenterteilung: **09.12.2015**
(21) Anmeldenummer: 13711667.9
(22) Anmeldetag: 20.03.2013
(51) Int. Cl.: H02K 41/03

(54) **STATORVORRICHTUNG FÜR EINEN LINEARMOTOR UND LINEARES TRANSPORTSYSTEM**
STATOR DEVICE FOR A LINEAR MOTOR, AND LINEAR TRANSPORT SYSTEM
STATOR DE MOTEUR LINÉAIRE ET SYSTÈME DE TRANSPORT LINÉAIRE

(30) Priorität: 27.03.2012 DE 102012204916
(43) Veröffentlichungstag der Anmeldung: 04.02.2015
(73) Patentinhaber: Beckhoff Automation GmbH, 33415 Verl (DE)
(72) Erfinder: PRÜSSMEIER, Uwe, 32657 Lemgo (DE)
(74) Vertreter: Patentanwaltskanzlei WILHELM & BECK
(86) Internationale Anmeldenummer: PCT/EP2013/055851
(87) Internationale Veröffentlichungsnummer: WO 2013/143950

(56) Entgegenhaltungen:
- CN-C- 100 592 609
- US-A1- 2005 173 991
- US-A1- 2008 265 691
- US-A1- 2009 230 785

## Beschreibung

Die Erfindung betrifft ein lineares Transportsystem.

Aus der Offenlegungsschrift WO 96/27544 ist eine Vorrichtung zum Transportieren von Produkten zwischen verschiedenen Stationen bekannt. Hierbei ist ein Wagen vorgesehen, welcher ein U-förmiges Joch aufweist, wobei an den Innenseiten des Jochs Permanentmagnete gebildet sind. Zwischen dem Joch sind mehrere Luftspulen angeordnet, welche auf einer Trägerplatte gesetzt sind. Bei einer elektrischen Bestromung der Luftspulen bildet sich ein Magnetfeld aus, welches mit dem entsprechenden Magnetfeld der Permanentmagnete des Jochs wechselwirkt, so dass der Wagen eine translatorische Bewegung erfährt. Die Luftspulen bilden einen Luftspalt zwischen den Permanentmagneten. Dieser Spalt muss gering gehalten werden um eine gute Kraftwirkung zu erzielen. Die mechanische Festigkeit steht dem entgegen und lässt keine gute Festigkeit zu. Die mechanische Führung kann so nicht mit der Spulenanordnung kombiniert werden. Ferner weisen Luftspulen den Nachteil hoher magnetischer Streuverluste auf, insbesondere bei größeren Abmessungen. In der Regel sind Luftspulen durch eine geringere Induktivität gekennzeichnet, was bei gleichem Aufbau und gleicher Ansteuerung zu einer geringeren Vorschubskraft führt.

Aus der Patentschrift US 6,876,107 B2 ist ein Transportsystem bekannt. Hierbei ist ein Schlitten mit einem U-förmigen Joch vorgesehen, wobei an Innenseiten des U-förmigen Jochs Permanentmagnete angeordnet sind. Innerhalb des U-förmigen Jochs sind zwei gegenüberliegende Spulen gebildet. Bei einer entsprechenden Bestromung der Spulen bildet sich ein Magnetfeld aus, welches mit dem Magnetfeld der Permanentmagnete wechselwirkt, so dass der Schlitten eine translatorische Bewegung durchführt. Aufgrund der hohen Anzahl an benötigten Spulen weist ein derartiger Aufbau eine hohe Komplexität auf, was zu hohen Kosten für die Bauteile und deren Verdrahtung etc. führt. Zudem bedingt ein derartiger Aufbau einen erheblichen Bauraumbedarf.

Die Offenlegungsschrift US 2008/0036305 A1 zeigt einen Linearmotor umfassend mehrere Kern-/Wicklungseinheiten, die jeweils einen Kern aus Stahl sowie eine um den Kern gewickelte Spule umfassen. Hierbei sind die Kern/Wicklungseinheiten an Halteelementen befestigt, wobei die Halteelemente selbst an einem Rahmen befestigt sind.

Die Offenlegungsschrift DE 690 03 365 T2 zeigt einen Linearmotor umfassend einen Stator. Der Stator umfasst mehrere Spulen, die von Befestigungselementen dicht umgeben und gehalten sind. Hierbei sind die Befestigungselemente aus nichtmagnetischen, leitenden Materialien wie beispielsweise Aluminium hergestellt. Des Weiteren ist eine Schaltungsplatine vorgesehen, die am oberen Ende der Spulen horizontal angeordnet ist. Auf der Schaltungsplatine sind elektronische Steuerschaltungen für die Spulen angeordnet.

Die Offenlegungsschrift JP 002000324789 A zeigt eine Luftspule umfassend ein Versteifungselement aus Plastik, um das eine Spule gewickelt ist. Bei der Spule handelt es sich um eine Luftspule. Des Weiteren weist das Versteifungselement eine Hervorhebung auf, die in ein Loch eines Substrats mit elektrischen Anschlüssen eingesetzt werden kann.

Nachteilig an den bekannten Systemen ist also insbesondere, dass sie erheblich großen Bauraum benötigen und mechanische Instabilitäten aufweisen, was beispielsweise im Betrieb zu störenden Vibrationen führen kann. Darüber hinaus weisen die bekannten Systeme auch die im Zusammenhang mit Luftspulen beschriebenen obigen Nachteile auf.
Stand der Technik ist in der US 2009230785 offenbart.

Die der Erfindung zugrunde liegende Aufgabe kann daher darin gesehen werden, ein verbessertes lineares Transportsystem anzugeben, das einen einfacheren Aufbau aufweist, und wobei insbesondere eine elektrische Kontaktierung eines Magnetfelderzeugers zum Bilden eines Magnetfeldes einfach durchgeführt werden kann.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird eine Statorvorrichtung für einen Linearmotor bereitgestellt. Die Statorvorrichtung umfasst einen elektrisch bestrombaren Magnetfelderzeuger zum Bilden eines Magnetfeldes. Ferner ist eine Halteeinrichtung zum Halten des Magnetfelderzeugers gebildet. Der Magnetfelderzeuger ist an der Halteeinrichtung befestigt. Die Halteeinrichtung ist zumindest teilweise aus einem elektrisch und/oder magnetisch nicht-leitenden Material gebildet ist.

Gemäß einem weiteren Aspekt wird ein lineares Transportsystem bereitgestellt. Das lineare Transportsystem umfasst die vorgenannte Statorvorrichtung und einen Träger für ein Fahrzeug, wobei der Träger ein Reaktionsteil umfasst, welches ausgebildet ist, mit dem mittels des Magnetfelderzeugers der Statorvorrichtung gebildeten Magnetfeld wechselzuwirken, so dass insbesondere in vorteilhafter Weise eine Vorschubkraft gebildet wird, die den Träger verlagert bzw. bewegt. Vorzugsweise ist das Reaktionsteil als ein weiterer Magnetfelderzeuger zum Bilden eines Magnetfeldes gebildet. Insbesondere können mehrere Träger gebildet sein, welche vorzugsweise gleich oder unterschiedlich gebildet sind.

Das Vorsehen eines Materials aus einem elektrisch und/oder magnetisch nicht-leitenden Material für die Halteeinrichtung bewirkt in vorteilhafter Weise, dass die Halteeinrichtung einen magnetischen Kreis nicht oder zumindest nicht störend beeinflusst. Die Halteeinrichtung bewirkt also insbesondere eine hohe mechanische Festigkeit bezüglich einer Halterung des Magnetfelderzeugers. Ferner bewirkt das elektrisch bzw. magnetisch nicht-leitende Material in vorteilhafter Weise eine Reduktion von Wirbelstromverlusten.

Nach einer Ausführungsform der Erfindung kann vorgesehen sein, dass die Halteeinrichtung als eine Leiterplatte für eine elektrische Kontaktierung des Magnetfelderzeugers gebildet ist. Somit kann in vorteilhafter Weise eine einfache elektrische Kontaktierung durch beispielsweise ein Anlöten des Magnetfelderzeugers auf der Leiterplatte bei gleichzeitiger hoher mechanischer Festigkeit bewirkt werden.

Vorzugsweise wird also eine Leiterplatte vorgesehen, welche in vorteilhafter Weise sowohl den Magnetfelderzeuger elektrisch kontaktieren als auch den Magnetfelderzeuger halten kann. Die Leiterplatte übernimmt somit in vorteilhafter Weise eine Doppelfunktion, als dass diese den Magnetfelderzeuger sowohl hält als auch elektrisch kontaktiert.

Somit kann insbesondere in vorteilhafter Weise Material eingespart werden, insofern anstelle von zwei getrennten Bauteilen, welche lediglich jeweils eine der vorgenannten Funktionen, also eine Halterung und eine elektrische Kontaktierung, ermöglichen, nun ein Bauteil, die Leiterplatte, aufweisend beide Funktionalitäten verwendet wird. Auch ist eine Montage der Statorvorrichtung erheblich vereinfacht. Der Magnetfelderzeuger wird an der Leiterplatte befestigt, wobei dann eine elektrische Verbindung zwischen dem Magnetfelderzeuger und der Leiterplatte mittels elektrischer Kontaktierung des Magnetfelderzeugers gebildet werden kann. Dadurch, dass der Magnetfelderzeuger an der Leiterplatte befestigt ist, kann eine entsprechende elektrische Verbindung im Vergleich zum Stand der Technik relativ kurz ausgeführt werden. Auch hier können somit in vorteilhafter Weise Material und Montagezeit eingespart werden. Ferner weist eine solche Ausführungsform auch ein geringeres Bauvolumen auf als bekannte Systeme.

Eine Leiterplatte im Sinne der vorliegenden Erfindung ist insbesondere ein Träger für elektronische Bauteile. Eine Leiterplatte im Sinne der vorliegenden Erfindung ist insbesondere ausgebildet, elektronische Bauteile mechanisch zu befestigen und elektrisch zu verbinden beziehungsweise zu kontaktieren. Eine Leiterplatte im Sinne der vorliegenden Erfindung kann insbesondere als eine Leiterkarte, eine Platine oder als eine gedruckte Schaltung gebildet sein. Im Englischen wird der Begriff "printed circuit board" für den deutschen Begriff Leiterplatte verwendet. Eine Leiterplatte im Sinne der vorliegenden Erfindung umfasst insbesondere ein elektrisch isolierendes Material mit elektrisch leitenden Verbindungen, welche vorzugsweise an dem elektrisch isolierenden Material angeordnet, vorzugsweise haften, können. Diese elektrisch leitenden Verbindungen können vorzugsweise auch als Leiterbahnen bezeichnet werden. Vorzugsweise umfasst die Leiterplatte als elektrisch isolierendes Material einen Kunststoff, insbesondere einen faserverstärkten Kunststoff. Durch das Vorsehen eines faserverstärkten Kunststoffes wird in vorteilhafter Weise in zumindest einer Vorzugsrichtung, insbesondere in mehreren Vorzugsrichtungen, eine besonders hohe mechanische Stabilität der Leiterplatte bewirkt. Hier kann eine weitere mechanische Stabilität insbesondere mittels eines Vergusses des Magnetfelderzeugers bewirkt werden. Somit ist die Leiterplatte insbesondere in der Lage, auch verhältnismäßig große und schwere Magnetfelderzeuger zu halten. Vorzugsweise kann vorgesehen sein, dass die Leiterbahnen, also die elektrisch leitenden Verbindungen, in dem elektrisch isolierenden Material eingebettet sind. Somit sind die elektrischen Leiterbahnen gegen äußere Einflüsse in vorteilhafter Weise geschützt. Insbesondere ist so auch in vorteilhafter Weise eine elektrische Kurzschlussgefahr verringert, wenn nicht gar vermieden, insofern die elektrischen Leiterbahnen mittels des elektrisch isolierenden Materials zum einen voneinander und zum anderen auch von weiteren elektrisch leitenden Bauteilen isoliert sind. Das Vorsehen einer Leiterplatte umfassend einen Kunststoff, insbesondere einen faserverstärkten Kunststoff, weist ferner insbesondere den Vorteil auf, dass eine solche Leiterplatte einen magnetischen Kreis, also ein Magnetfeld, nicht beeinflusst.

Als elektrisch bzw. magnetisch nicht-leitendes Material kann allgemein vorzugsweise ein Harz oder eine Keramik vorgesehen sein. Insbesondere kann allgemein vorgesehen sein, dass die Halteeinrichtung mehrere unterschiedliche elektrisch und/oder magnetisch nicht-leitende Materialien umfasst bzw. aus solchen zumindest teilweise gebildet ist. Das Material kann beispielsweise ein Kunststoff sein, insbesondere ein faserverstärkter Kunststoff.

In einer Ausführungsform der Erfindung kann vorgesehen sein, dass das Reaktionsteil als eine Struktur aus einem weichmagnetischen Material gebildet ist oder eine solche Struktur umfasst. Ein weichmagnetisches Material bezeichnet insbesondere ein ferromagnetisches Material, was sich in einem Magnetfeld leicht magnetisieren lässt. Ein weichmagnetisches Material weist von sich aus kein permanentes oder nur ein sehr schwaches Magnetfeld auf, ist also kein Dauermagnet. Vorzugsweise weist das weichmagnetische Material eine Koerzitivfeldstärke von weniger als 1000 A/m auf. Ein weichmagnetisches Material kann beispielsweise Eisen und/oder Ferrite umfassen, welche insbesondere keramische bzw. gesinterte Werkstoffe sind. Ein weichmagnetisches Material kann beispielsweise eine Kobalt-Eisen-Legierung und/oder eine Nickel-Eisen-Legierung und/oder Ferrosilicium-Legierung (FeSi) und/oder Eisen-Aluminium-Silizium-Legierung (FeAlSi) umfassen. Eine Klassifizierung eines Materials als ein weichmagnetisches Material kann insbesondere mittels der Norm IEC 60404-1 durchgeführt werden. Das heißt also insbesondere, dass ein weichmagnetisches Material aus der mittels dieser Norm gebildeten Gruppe an Materialien gewählt sein kann.

Das Vorsehen eines solchen weichmagnetischen Materials bewirkt in vorteilhafter Weise, dass ein solcher Linearmotor umfassend die Statorvorrichtung und den Träger mit dem weichmagnetischen Material nach dem Reluktanzprinzip arbeitet. Ein solcher Linearmotor kann insofern insbesondere als ein Reluktanzmotor bezeichnet werden. Die Wirkungsweise ist insbesondere wie folgt.

Die Bewegung bzw. Verlagerung des Trägers kommt insbesondere dadurch zustande, dass das System umfassend das weichmagnetische Material und den Magnetfelderzeuger nach minimaler Reluktanz, auch magnetischer Widerstand genannt, strebt. Hierbei wird das weichmagnetische Material aufgrund des mittels des Magnetfelderzeugers gebildeten Magnetfelds magnetisiert und magnetisch von dem Magnetfelderzeuger angezogen, so dass sich der Träger verlagert. Insbesondere wenn mehrere Magnetfelderzeuger entlang einer Wegstrecke vorgesehen sind, werden die Magnetfelderzeuger zeitlich nacheinander bestromt, so dass sich entlang der Wegstrecke ein Magnetfeld aufbaut, was das weichmagnetische Material entsprechend magnetisch anzieht, wobei vorzugsweise vorgesehen sein kann, dass bei Stattfinden einer maximalen Annäherung, also eine Minimierung des Spaltes zwischen Magnetfelderzeuger und weichmagnetischem Material, auf dem beweglichen Teil, eine entsprechende Bestromung abgeschaltet wird. Das heißt also insbesondere, dass wenn sich der Spalt minimiert hat bzw. die magnetischen Feldlinien den kürzest möglichen Weg einnehmen und keine Vorschubkraft mehr erzeugen, der Strom für den entsprechenden Magnetfelderzeuger ausgeschaltet wird.

Das heißt also insbesondere, dass der erste Magnetfelderzeuger bestromt wird, um das Fahrzeug in Richtung des ersten Magnetfelderzeugers magnetisch anzuziehen. Wenn sich der Spalt minimiert hat bzw. die magnetischen Feldlinien den kürzest möglichen Weg einnehmen und keine Vorschubkraft mehr erzeugen, wird ein Strom für den ersten Magnetfelderzeuger ausgeschaltet. Es wird dann ein zweiter Magnetfelderzeuger, welcher dem ersten Magnetfelderzeuger nachfolgend angeordnet ist, bestromt, so dass der zweite Magnetfelderzeuger den Träger und damit insbesondere ein Fahrzeug in Richtung des zweiten Magnetfelderzeugers magnetisch anzieht. Wenn sich der Spalt minimiert hat bzw. die magnetischen Feldlinien den kürzest möglichen Weg einnehmen und keine Vorschubkraft mehr erzeugen, wird ein Strom für den zweiten Magnetfelderzeuger ausgeschaltet. Es wird dann ein dritter Magnetfelderzeuger, welcher dem zweiten Magnetfelderzeuger nachfolgend angeordnet ist, bestromt, so dass der dritte Magnetfelderzeuger den Träger und damit das Fahrzeug in Richtung des dritten Magnetfelderzeugers magnetisch anzieht. Die vorgenannten Schritte werden dann analog für den vierten und eventuell weiteren folgenden Magnetfelderzeuger durchgeführt.

In einer weiteren Ausführungsform der Erfindung kann vorgesehen sein, dass die Bestromung gemäß einer mathematischen Funktion erfolgt. Beispielsweise kann eine sinusförmige Funktion vorgesehen sein. Vorzugsweise kann die Bestromung mit verschiedenen zeitlichen und/oder verschiedenen örtlichen Verschiebungen in mehreren Magnetfelderzeugern gleichzeitig erfolgen, so dass hier nicht nur ein einfaches Ein- bzw. Ausschalten durchgeführt wird.

Gemäß einer Ausführungsform der Erfindung weist die Halteeinrichtung ein Loch oder mehrere Löcher für Befestigungsbohrungen auf, so dass in vorteilhafter Weise der Magnetfelderzeuger an die Halteeinrichtung geschraubt werden kann. Eine solche Befestigung weist insbesondere den Vorteil auf, dass sie lösbar ausgestaltet werden kann, so dass beispielsweise ein Austausch des Magnetfelderzeugers besonders einfach durchgeführt werden kann.

In einer anderen Ausführungsform der Erfindung kann vorgesehen sein, dass der Magnetfelderzeuger an der Halteeinrichtung angeklebt ist. Somit kann in vorteilhafter Weise eine besonders zuverlässige und dauerhaft haltende Befestigung des Magnetfelderzeugers an der Halteeinrichtung bewirkt werden.

Ein Magnetfelderzeuger im Sinne der vorliegenden Erfindung ist insbesondere dafür ausgebildet, bei einer elektrischen Bestromung ein Magnetfeld zu bilden. Dies gilt analog für den weiteren Magnetfelderzeuger. Zwecks besserer Unterscheidung wird das vom weiteren Magnetfelderzeuger gebildete Magnetfeld als ein weiteres Magnetfeld bezeichnet. Das Magnetfeld und das weitere Magnetfeld wechselwirken insofern in vorteilhafter Weise miteinander, so dass über das Kreuzprodukt der Lorentzkraft eine Vorschubkraft auf den Träger beaufschlagt wird, so dass dieser eine Bewegung, insbesondere eine translatorische Bewegung, durchführt.

Gemäß einer Ausführungsform der Erfindung kann vorgesehen sein, dass an dem Träger ein Fahrzeug befestigt ist, so dass dieses entsprechend verlagert werden kann. Ein Fahrzeug im Sinne der vorliegenden Erfindung kann vorzugsweise auch als Schlitten oder Wagen bezeichnet werden. Im Englischen wird hierfür in der Regel der Begriff "mover" verwendet. Vorzugsweise kann der weitere Magnetfelderzeuger ein statisches Magnetfeld bilden. Das heißt also insbesondere, dass das weitere Magnetfeld ein statisches Magnetfeld ist. Vorzugsweise umfasst der weitere Magnetfelderzeuger einen oder mehrere Permanentmagnete. Insbesondere kann der weitere Magnetfelderzeuger als ein Permanentmagnet gebildet sein.

Gemäß einer weiteren Ausführungsform der Erfindung kann vorgesehen sein, dass der Träger mehrere weitere Magnetfelderzeuger aufweist. Vorzugsweise weist der Träger mehrere weitere Magnetfelderzeuger auf, welche jeweils gegenüberliegenden Enden des Magnetfelderzeugers gegenüberliegend angeordnet sind, so dass zwischen den weiteren Magnetfelderzeugern und dem Magnetfelderzeuger ein Spalt gebildet ist. Der Magnetfelderzeuger und die weiteren Magnetfelderzeuger in dem linearen Transportsystem sind somit beabstandet voneinander angeordnet. Vorzugsweise weist der Träger zwei Schenkel auf, wobei an Innenseiten der Schenkel die mehreren Magnetfelderzeuger gebildet sind. Zwischen den beiden Schenkeln und den Innenseiten der Schenkel gegenüberliegend kann vorzugsweise der Magnetfelderzeuger angeordnet sein. Vorzugsweise weist der Träger eine U-Form auf. Aufgrund der beiden Schenkel und der entsprechenden Anordnung ist eine Doppelspaltanordnung gebildet, insofern jeweils ein Spalt zwischen den Innenseiten der Schenkel und den entsprechenden Seiten des Magnetfelderzeugers gebildet ist.

Nach einer Ausführungsform der Erfindung kann vorgesehen sein, dass der Magnetfelderzeuger mittels eines Lötpads oder mehrerer Lötpads mit auf und/oder in der Halteeinrichtung, insbesondere der Leiterplatte, befindlichen elektrischen Leiterbahnen elektrisch verbunden beziehungsweise kontaktiert ist. Das heißt also insbesondere, dass eine elektrische Kontaktierung des Magnetfelderzeugers mittels des Lötpads respektive mittels der Lötpads bewirkt wird.

Nach einer weiteren Ausführungsform der Erfindung kann vorgesehen sein, dass der Magnetfelderzeuger mittels eines Steckers und/oder einer Verschraubung und/oder einer Klemmung und/oder einer Lötung mit auf und/oder in der Halteeinrichtung, vorzugsweise der Leiterplatte, befindlichen elektrischen Leiterbahnen elektrisch verbunden beziehungsweise kontaktiert ist. Das heißt also insbesondere, dass eine elektrische Kontaktierung zwischen dem Magnetfelderzeuger und der Halteeinrichtung, beispielsweise der Leiterplatte, mittels eines Steckers und/oder einer Verschraubung und/oder einer Klemmung und/oder einer Lötung bewirkt werden kann. Vorzugsweise können auch mehrere Stecker, Verschraubungen, Klemmungen und/oder Lötungen vorgesehen sein.

Nach einer anderen Ausführungsform der Erfindung können mehrere Magnetfelderzeuger vorgesehen sein. Somit kann beispielsweise ein besonders großes Magnetfeld gebildet werden. Weiterhin kann somit in vorteilhafter Weise auch ein räumlich ausgedehnter Bereich gebildet werden, in welchem ein Magnetfeld gebildet werden kann. Eine Wegstrecke kann somit in vorteilhafter Weise gebildet werden. Die mehreren Magnetfelderzeuger können vorzugsweise gleich oder unterschiedlich gebildet sein. Vorzugsweise können die mehreren Magnetfelderzeuger individuell bestromt werden, so dass insbesondere in vorteilhafter Weise jeweils unterschiedliche Magnetfelder gebildet werden können. Vorzugsweise werden die mehreren Magnetfelderzeuger zu einem mehrphasigen System geschaltet. Insbesondere können drei Phasen vorgesehen sein. Das heißt also insbesondere, dass jeder Magnetfelderzeuger der mehreren Magnetfelderzeuger einer Phase eines elektrischen Stroms zugeordnet wird.

Nach einer Ausführungsform der Erfindung kann vorgesehen sein, dass der Magnetfelderzeuger eine Spule umfasst. Vorzugsweise kann der Magnetfelderzeuger mehrere Spulen umfassen. Die Spulen können vorzugsweise gleich oder unterschiedlich gebildet sein. In einer weiteren möglichen beispielhaften Ausführungsform ist die Spule als eine Luftspule ausgebildet. Eine Luftspule weist keinen Kern auf, ist also kernlos gebildet. Der Kern besteht sozusagen aus Luft. In einer alternativen vorteilhaften Ausführungsform kann die Spule einen Kern umfassen. Das heißt also insbesondere, dass die Spule um einen Kern gewickelt ist. Bei dem Kern kann es sich beispielsweise um einen Eisenkern handeln. Der Kern kann beispielsweise aus einem Hohlmaterial oder einem Vollmaterial gebildet sein. Vorzugsweise kann der Kern ein weichmagnetisches Material umfassen. Insbesondere weist der Kern ein Material mit einer hohen Permeabilität und/oder mit einer geringen Restmagnetisierung auf. Vorzugsweise umfasst der Kern ein gesintertes Material. Der Kern kann insbesondere aus einem gesinterten Vollmaterial gebildet sein. Das Vorsehen eines Sintermaterials in einem Kern einer Spule weist insbesondere den Vorteil auf, dass in einem solchen Kern geringe bis gar keine Wirbelströme induziert werden können, wodurch in vorteilhafter Weise Wirbelstromverluste verringert, wenn nicht gar vermieden werden können.

In einer anderen Ausführungsform der Erfindung ist eine zweite Halteeinrichtung zum Halten des Magnetfelderzeugers gebildet. Vorzugsweise ist an der zweiten Halteeinrichtung der Magnetfelderzeuger befestigt. Insbesondere ist der Magnetfelderzeuger zwischen den beiden Halteeinrichtungen angeordnet. Die beiden Halteeinrichtungen sind vorzugsweise gegenüberliegend angeordnet. Das Vorsehen einer zweiten Halteeinrichtung weist insbesondere den Vorteil auf, dass somit eine noch zuverlässigere Halterung des Magnetfelderzeugers bewirkt wird. Die im Zusammenhang mit der ersten Halteeinrichtung gemachten Ausführungen gelten analog für die zweite Halteeinrichtung. Das heißt also insbesondere, dass auch die zweite Halteeinrichtung ein elektrisch und/oder magnetisch nicht-leitendes Material umfassen kann bzw. aus einem solchen zumindest teilweise gebildet sein kann.

Gemäß einer weiteren Ausführungsform der Erfindung kann die zweite Halteeinrichtung als eine Leiterplatte gebildet sein. Wenn die zweite Halteeinrichtung als eine Leiterplatte gebildet ist, so kann diese Leiterplatte zur besseren Unterscheidung als eine zweite Leiterplatte bezeichnet werden. Zur besseren Unterscheidung kann vorzugsweise vorgesehen sein, dass die Leiterplatte entsprechend der ersten Halteeinrichtung als eine erste Leiterplatte bezeichnet wird. Vorzugsweise kann vorgesehen sein, dass die erste Leiterplatte und die zweite Leiterplatte gleich gebildet sind. Alternativ kann vorgesehen sein, dass die erste Leiterplatte und die zweite Leiterplatte unterschiedlich gebildet sind.

Die im Zusammenhang mit der ersten Leiterplatte gemachten Ausführungen gelten analog für die zweite Leiterplatte. Das heißt also insbesondere, dass die zweite Leiterplatte vorzugsweise die entsprechenden Merkmale aufweisen kann.

Ein Linearmotor im Sinne der vorliegenden Erfindung entspricht insbesondere einer linearen Ausführung einer rotierenden Maschine aufweisend ein bestrombares Primärteil, das einem Stator eines Rotationsmotors vergleichbar ist, und ein Sekundärteil, das einem Rotor des Rotationsmotors entspricht. Im Lichte dieser Ausführungen kann der Magnetfelderzeuger als das Primärteil bezeichnet werden. Das Reaktionsteil, insbesondere der weitere Magnetfelderzeuger, kann als das Sekundärteil bezeichnet werden. Bei Linearmotoren kann insbesondere zwischen Asynchron- und Synchronmotoren unterschieden werden, wobei bei der asynchronen Bauweise das Sekundärteil mit Kurzschlussstäben bestückt ist, beim Synchronmotor dagegen aus Permanentmagneten besteht. Synchronmotoren weisen insbesondere den Vorteil auf, dass sie einen hohen Wirkungsgrad und hohe Dauervörschubkräfte aufweisen. Linearmotoren im Sinne der vorliegenden Erfindung können insbesondere zur Erzeugung von translatorischen Vorschubbewegungen verwendet werden. Im Lichte der vorgenannten Ausführungen bilden die Statorvorrichtung und das Reaktionsteil einen Linearmotor.

Im Lichte der vorherigen Ausführungen kann ein Kern einer Spule auch als ein Statorzahn bezeichnet werden. Die Kerne beziehungsweise Statorzähne, um welche die Spulen gewickelt sein können, können beispielsweise gleich oder unterschiedlich gebildet sein. Ein Statorzahn, um welchen eine Spule gewickelt ist, kann vorzugsweise als ein gewickelter Statorzahn bezeichnet werden. Ein Statorzahn, um welchen keine Spule gewickelt ist, kann vorzugsweise als ein ungewickelter Statorzahn bezeichnet werden.

In einer anderen Ausführungsform der Erfindung kann vorgesehen sein, dass die erste Halteeinrichtung eine erste Aussparung aufweist, in welcher ein erster Halteabschnitt des Magnetfelderzeugers gesteckt und fixiert ist. Das heißt also insbesondere, dass der erste Halteabschnitt des Magnetfelderzeugers in der ersten Aussparung steckend fixiert ist. Das heißt also insbesondere, dass der erste Halteabschnitt in die erste Aussparung gesteckt wird und anschließend oder dabei fixiert wird. Vorzugsweise können eine formschlüssige und/oder eine kraftschlüssige beziehungsweise reibschlüssige Fixierung vorgesehen sein. Das Fixieren kann vorzugsweise mittels Kleben und/oder Verschweißen und/oder Vergießen bewirkt werden.

In einer Ausführungsform der Erfindung kann vorgesehen sein, dass der Magnetfelderzeuger einen Statorzahn und eine um den Statorzahn gewickelte Spule umfasst, wobei der erste Halteabschnitt an einem ersten Ende des Statorzahns gebildet ist. Das heißt also insbesondere, dass der Statorzahn an einem ersten Ende in die erste Aussparung der ersten Halteeinrichtung gesteckt ist und in dieser fixiert ist. Diese Ausführungsform weist insbesondere den Vorteil auf, dass so eine besonders einfache Montage einer Spule mit einem Kern an der Halteeinrichtung, vorzugsweise der Leiterplatte, bewirkt werden kann. Vorzugsweise kann der ungewickelte Kern beziehungsweise der ungewickelte Statorzahn an seinem ersten Ende in die erste Aussparung gesteckt werden und in dieser fixiert werden. Anschließend kann beispielsweise vorgesehen sein, dass um den noch ungewickelten Kern beziehungsweise Statorzahn die Spule gewickelt wird. Somit ist ein Bilden einer Spule mittels Wickeln eines Spulendrahts um einen Kern in vorteilhafter Weise besonders vereinfacht. Insbesondere lässt sich so in vorteilhafter Weise ein Kupferfüllfaktor der Spule von über 60% erreichen. Vorzugsweise kann vorgesehen sein, dass eine vorgewickelte Spule auf den Statorzahn geschoben bzw. der Statorzahn in eine vorgewickelte Spule eingeschoben wird. Vorzugsweise wird ein Spulendraht direkt um den Statorzahn gewickelt, insbesondere wird hierfür ein Backlackdraht verwendet, wobei die direkte Wicklung in vorteilhafter Weise eine hohe mechanische Festigkeit zwischen Spule und Statorzahn bewirkt. Ferner wird ein erreichbarer Füllfaktor, insbesondere ein Kupferfüllfaktor noch weiter verbessert. Der so fertig umwickelte Statorzahn wird dann vorzugsweise in die Aussparung gesteckt.

Nach einer weiteren Ausführungsform der Erfindung kann vorgesehen sein, dass die zweite Halteeinrichtung eine zweite Aussparung aufweist, in welcher ein zweiter Halteabschnitt des Magnetfelderzeugers gesteckt und fixiert ist. Die im Zusammenhang mit dem ersten Halteabschnitt des Magnetfelderzeugers gemachten Ausführungen gelten analog für den zweiten Halteabschnitt.

In einer weiteren Ausführungsform der Erfindung kann vorgesehen sein, dass der zweite Halteabschnitt an einem dem ersten Ende gegenüberliegenden zweiten Ende des Statorzahns gebildet ist. Das heißt also insbesondere, dass der Statorzahn beziehungsweise der Kern der Spule in jeweilige Aussparungen der beiden Halteeinrichtungen gesteckt ist und fixiert ist. Die entsprechenden Ausführungen bezüglich des ersten Endes des Statorzahns gelten analog für das zweite Ende des Statorzahns. Vorzugsweise wird die aus dem Statorzahn, der Spule und den Halteeinrichtungen gebildete Baueinheit mittels Vergießen fixiert, was zusätzlich zu einer erhöhten Festigkeit der Baueinheit führt.

Nach einer anderen Ausführungsform der Erfindung kann vorgesehen sein, dass mehrere voneinander beabstandete Magnetfelderzeuger gebildet sind und wobei zwischen zwei Magnetfelderzeugern jeweils ein ungewickelter Statorzahn vorgesehen ist, der an jeweils einem Ende von zwei gegenüberliegenden Enden des Statorzahns in eine jeweilige Aussparung der beiden Halteeinrichtungen gesteckt ist und fixiert ist. Durch das Vorsehen eines ungewickelten Statorzahns zwischen zwei Magnetfelderzeugern, insbesondere zwischen zwei gewickelten Statorzähnen, kann in vorteilhafter Weise insbesondere eine Reduzierung von Oberwellen in elektromagnetischen Kraftvektoren bewirkt werden.

Nach einer alternativen Ausführungsform der Erfindung kann vorgesehen sein, dass mehrere voneinander beabstandete Magnetfelderzeuger gebildet sind, wobei zwischen zwei Magnetfelderzeugern jeweils nur ein Spalt, insbesondere ein minimaler Spalt, ausgebildet ist. Durch die direkte Aneinanderreihung der Magnetfelderzeuger kann in vorteilhafter Weise die mittels der Magnetfelderzeuger erzeugte Antriebskraft erhöht werden.

Nach einer Ausführungsform der Erfindung weist die erste Halteeinrichtung, beispielsweise die Leiterplatte, mehrere erste Aussparungen auf. Aussparungen der ersten Halteeinrichtung können allgemein insbesondere auch als erste Aussparungen bezeichnet werden. Vorzugsweise kann vorgesehen sein, dass in jeder zweiten ersten Aussparung ein erster Halteabschnitt, insbesondere ein Statorzahn, gesteckt ist um welche jeweils eine Spule gewickelt ist. Zwischen zwei solchen gewickelten Statorzähnen kann vorzugsweise vorgesehen sein, dass ein ungewickelter Statorzahn in die entsprechend freie erste Aussparung gesteckt ist und fixiert ist. Durch das Vorsehen von mehreren Aussparungen kann insbesondere in vorteilhafter Weise eine Wegstrecke für das Fahrzeug gebildet werden, entlang derer es verfahren werden kann. Die ersten Aussparungen können linear verlaufend angeordnet sein. Das heißt also insbesondere, dass dadurch in vorteilhafter Weise eine lineare Wegstrecke gebildet ist. Die ersten Aussparungen können vorzugsweise eine Krümmung aufweisend verlaufend angeordnet sein. Das heißt also insbesondere, dass die ersten Aussparungen entlang eine Kurve mit einer Krümmung angeordnet ist. Vorzugsweise können die ersten Aussparungen entlang eines Kreisbogenabschnitts angeordnet sein. Insbesondere können die ersten Aussparungen entlang einer Klothoide angeordnet sein. Eine Klothoide ist insbesondere eine Kurve, bei der ein Radius am Anfang größer und später kleiner ist als ein mittlerer Radius. Das heißt also insbesondere, dass ein Krümmungsverlauf der Klothoide linear zunimmt. Damit wird in vorteilhafter Weise eine ruckfreie Fahrdynamik des Fahrzeugs bewirkt.

In einer weiteren Ausführungsform kann vorgesehen sein, dass die zweite Halteeinrichtung mehrere zweite Aussparungen aufweist. Aussparungen der zweiten Halteeinrichtung können allgemein auch als zweite Aussparungen bezeichnet werden. Vorzugsweise kann vorgesehen sein, dass in jede zweite Aussparung der zweiten Aussparungen ein zweiter Halteabschnitt eines Magnetfelderzeugers gesteckt und fixiert ist. Vorzugsweise kann in der dazwischenliegenden zweiten Aussparung ein ungewickelter Statorkern gesteckt und fixiert sein. Die entsprechenden Ausführungen in Bezug zu der ersten Halteeinrichtung mit den ersten Aussparungen gelten analog für die zweite Halteeinrichtung mit den zweiten Aussparungen.

Nach einer anderen Ausführungsform der Erfindung kann vorgesehen sein, dass die Halteeinrichtung, die beispielsweise vorteilhaft als Leiterplatte ausgebildet ist, eine Leistungselektronik zur Ansteuerung des Magnetfelderzeugers aufweist. Dadurch kann in vorteilhafter Weise ein entsprechender Bauraum besonders effizient ausgenutzt werden, insofern hier die Leistungselektronik direkt auf der Halteeinrichtung befestigt werden kann. Vorzugsweise kann vorgesehen sein, dass die Leistungselektronik in der Halteeinrichtung eingebettet ist, so dass diese in vorteilhafter Weise vor äußeren Einflüssen geschützt ist. Insbesondere weist das Vorsehen einer Leistungselektronik auf oder in der Halteeinrichtung den Vorteil auf, dass entsprechende Signalwege zwischen der Leistungselektronik und den Leiterbahnen beziehungsweise dem Magnetfelderzeuger kurz ausgeführt werden können, so dass entsprechende Signalverluste verringert sind. Ferner wird in vorteilhafter Weise ein Bauraum verkleinert.

In einer weiteren Ausführungsform der Erfindung kann ein Parameterspeicher für Ansteuerparameter des Magnetfelderzeugers vorgesehen sein. Das heißt also insbesondere, dass in dem Parameterspeicher Ansteuerparameter des Magnetfelderzeugers gespeichert sein können beziehungsweise sind. Ansteuerparameter im Sinne der vorliegenden Erfindung bezeichnen insbesondere Parameter, mittels welchen der Magnetfelderzeuger angesteuert werden kann. Ansteuerparameter im Sinne der vorliegenden Erfindung können insbesondere einen definierten Stromverlauf, insbesondere einen örtlichen Stromverlauf, bzw. einen örtlichen Zusammenhang zwischen Strom und Vorschubkraft bzw. Kraftkonstante des Motors umfassen. Das heißt also insbesondere, dass mittels der Ansteuerparameter eine Ansteuerung des Magnetfelderzeugers in vorteilhafter Weise bewirkt werden kann. Diese Ansteuerparameter können vorzugsweise im Betrieb ausgelesen werden, beispielsweise mittels einer Elektronik, insbesondere der Leistungselektronik, um den Magnetfelderzeuger entsprechend zu betreiben. Vorzugsweise ist der Parameterspeicher auf oder in der Halteeinrichtung, insbesondere auf oder in der ersten oder zweiten Halteeinrichtung, angeordnet. Insbesondere können auch mehrere Parameterspeicher vorgesehen sein, so dass in vorteilhafter Weise eine Ausfallredundanz geschaffen ist.

In einer anderen Ausführungsform kann vorgesehen sein, dass ein thermischer Energieabführer zum Abführen von mittels des Magnetfelderzeugers im Betrieb gebildete thermische Energie gebildet ist. Dadurch wird in vorteilhafter Weise ein Überhitzen des Magnetfelderzeugers in vorteilhafter Weise vermieden. Bei dem thermischen Energieabführer kann es sich beispielsweise um ein mittels eines Fluids, also insbesondere mittels einer Flüssigkeit und/oder eines Gases, kühlbaren Energieabführer handeln. Vorzugsweise kann der Energieabführer als ein Profilelement, insbesondere als ein festes Profilelement, gebildet sein. Ein solches Profilelement kann in unmittelbarer Nähe zu dem Magnetfelderzeuger angeordnet werden, so dass aufgrund der ausreichend geringen Distanz eine ausreichend gute thermische Kopplung zwischen dem Magnetfelderzeuger und dem Profilelement bewirkt werden kann, so dass effizient und effektiv thermische Energie abgeführt werden kann. Insbesondere wenn der Magnetfelderzeuger eine elektrische Isolierung aufweist, kann in diesem Bereich der thermische Energieabführer in unmittelbarem Kontakt gebracht werden, also direkt mit dem Magnetfelderzeuger verbunden werden, so dass eine noch effektivere und effizientere Abführung von thermischer Energie ermöglicht ist. Vorzugsweise weisen die beiden Halteeinrichtungen entsprechende Löcher für Durchgangsbohrungen auf, um insbesondere eine entsprechende Verschraubung mit dem Energieabführer, vorzugsweise dem Profilelement, zu bewirken.

In einer anderen Ausführungsform der Erfindung kann vorgesehen sein, dass zwischen den beiden Halteeinrichtungen ein Stützprofilelement gebildet ist, wobei die beiden Halteeinrichtungen an dem Stützprofilelement befestigt sind. Dadurch wird in vorteilhafter Weise eine mechanische Stabilisierung der Statorvorrichtung bewirkt, insofern die beiden Halteeinrichtungen sich an dem Stützprofilelement abstützen können. Dieses kann insbesondere in vorteilhafter Weise mechanische Belastungen, welche auf die beiden Halteeinrichtungen wirken, aufnehmen und so in vorteilhafter Weise eine Beschädigung der beiden Halteeinrichtungen vermeiden. Solche Beschädigungen können beispielsweise durch eine übermäßig starke Biegung der Halteeinrichtungen bewirkt werden. Eine Befestigung kann insbesondere mittels Kleben und/oder mittels Schrauben und/oder mittels Nieten und/oder mittels Schweißen und/oder mittels Nägeln und/oder mittels Klemmungen bewirkt werden. Vorzugsweise weisen die beiden Halteeinrichtungen entsprechende Löcher für Durchgangsbohrungen auf, um insbesondere eine entsprechende Verschraubung mit dem Stützprofilelement zu bewirken. Insbesondere bei einem Vergießen des Magnetfelderzeugers bzw. bei einer Fixierung mittels Vergießen bewirkt der ausgehärtete Verguss zwischen Profil, Halteeinrichtung und umwickeltem und nicht umwickeltem, also ungewickelten, Statorzahn eine hohe mechanische Stabilität bzw. trägt zur Stabilität bei.

Gemäß einer anderen Ausführungsform der Erfindung kann eine Aufnahmeeinrichtung zur Befestigung einer Führung zum Führen eines Fahrzeugs gebildet sein. Eine solche Führung kann beispielsweise als eine Schiene gebildet sein, welche beispielsweise ein rollengeführtes Fahrzeug führen kann. Das Fahrzeug kann vorzugsweise zusätzlich oder anstelle fluid-, also insbesondere luftgeführt, und/oder magnetgeführt sein. Durch das Vorsehen einer Aufnahmeeinrichtung kann in vorteilhafter Weise bewirkt werden, dass je nach Anwendungsfall unterschiedliche Führungen verwendet werden können. Diese können dann einfach in vorteilhafter Weise an der Aufnahmeeinrichtung befestigt werden. Vorzugsweise kann die Aufnahmeeinrichtung integral mit dem Stützprofilelement gebildet sein. Das heißt also insbesondere, dass die Aufnahmeeinrichtung und das Stützprofilelement als ein Bauteil gebildet sind. Die Aufnahmeeinrichtung, insbesondere das Stützprofilelement, weist insbesondere eine oder mehrere Bohrungen und/oder Aufnahmen auf, an welchen beispielsweise die Führung befestigt beziehungsweise verschraubt werden kann. Es kann insbesondere vorgesehen sein, dass die Führung auf das Stützprofilelement geklebt wird.

Nach einer Ausführungsform der Erfindung kann vorgesehen sein, dass eine Oberfläche der Halteeinrichtung mittels einer Schutzschicht bedeckt ist. Eine Schutzschicht kann beispielsweise eine Edelstahlfolie sein. Eine Dicke einer Schutzschicht kann beispielsweise etwa 50 µm betragen. Vorzugsweise kann eine Dicke der Schutzschicht zwischen 1 µm und 300 µm betragen. Insbesondere kann vorgesehen sein, dass die Dicke der Schutzschicht kleiner als 250 µm, insbesondere kleiner als 200 µm, vorzugsweise kleiner als 150 µm, beispielsweise kleiner als 100 µm, beispielsweise kleiner als 50 µm ist. Die genaue Dicke der Schutzschicht hängt insbesondere von den Frequenzen eines Wechselmagnetfeldes des Magnetfelderzeugers ab. Hierbei muss in der Regel insbesondere sichergestellt sein, dass die Schutzschicht entsprechend den verwendeten Frequenzen ausreichend dünn ist, so dass dort keine oder nur geringe Wirbelstromverluste auftreten können. Das heißt also insbesondere, dass das Magnetfeld zwar die Schutzschicht durchdringt, dort aber keine Ummagnetisierungs- bzw. Wirbelstromverluste bewirkt. Wirbelstromverluste können im Allgemeinen auch dadurch vermieden werden, dass die Schutzschicht aus einem Kunststoff gebildet ist. Insbesondere kann es sich hierbei um einen lebensmitteltauglichen und/oder pharmazeutischtauglichen Kunststoff handeln. Ein solcher Kunststoff ist insbesondere gesetzlich zugelassen, um im Lebensmittelbereich und/oder in einem pharmazeutischen Umfeld verwendet zu werden. Allgemein ist die Schutzschicht zur Verwendung in einem pharmazeutischen und/oder einem Lebensmittelbereich ausgebildet. Durch das Vorsehen einer Schutzschicht wird in vorteilhafter Weise die Halteeinrichtung vor äußeren Einflüssen, beispielsweise Verschmutzungen, geschützt. Ferner kann in vorteilhafter Weise die Schutzschicht besonders einfach gereinigt werden, so dass beispielsweise gesetzliche Hygieneanforderungen erfüllt werden können. Insbesondere wenn die Oberfläche der Halteeinrichtung keine elektrischen Kontaktierungen und/oder Leiterbahnen aufweist, kann die Schutzschicht direkt auf die entsprechende Oberfläche angeordnet sein. Sofern die entsprechende Oberfläche Kontaktierungen und/oder elektrische Leiterbahnen aufweisen sollte, kann insbesondere vorgesehen sein, dass zwischen der Schutzschicht und der entsprechenden Oberfläche eine Isolationsschicht aufgebracht wird, so dass insbesondere in vorteilhafter Weise elektrische Kurzschlüsse vermieden werden können.

Gemäß einer Ausführungsform der Erfindung kann vorgesehen sein, dass der Träger zwei gegenüberliegende Endbereiche aufweist, wobei ein mittiger Bereich gebildet ist, welcher zwischen den beiden Endbereichen gebildet ist. In den Endbereichen und in dem mittigen Bereich sind vorzugsweise jeweils ein Permanentmagnet oder mehrere Permanentmagnete gebildet. Vorzugsweise kann vorgesehen sein, dass eine Anzahl der Permanentmagnete in den Endbereichen sich von einer Anzahl an Permanentmagneten in dem mittigen Bereich unterscheidet. Wenn ein solcher Träger einer Statorvorrichtung umfassend mehrere Magnetfelderzeuger gegenüberliegend angeordnet wird, so bewirken die Permanentmagnete des mittigen Bereichs aufgrund einer entsprechenden magnetischen Wechselwirkung mit den gegenüberliegend angeordneten Magnetfelderzeugern eine Vorschubkraft. Diese Vorschubkraft wird dann in vorteilhafter Weise den Träger verlagern. Die Permanentmagnete der Endbereiche wechselwirken ebenfalls mit den entsprechend gegenüberliegend angeordneten Magnetfelderzeugern, so dass hier eine abstoßende Kraft bei entsprechender Bestromung der Magnetfelderzeuger entsteht, welche eine Magnetschwebung des Trägers relativ zu der Statorvorrichtung bewirkt. Dies führt in vorteilhafter Weise zu einer mechanischen Entlastung einer Führung, welche ein Fahrzeug führt, insbesondere mittels Laufrollen, wenn das Fahrzeug an dem Träger befestigt ist. Ein Verschleiß an Laufrollen kann somit in vorteilhafter Weise vermieden bzw. verringert werden.

Vorzugsweise ist zwischen den Endbereichen und dem mittigen Bereich jeweils ein Zwischenbereich gebildet, welcher keine Permanentmagnete aufweist. Dieser Zwischenbereich ist insofern insbesondere magnetlos gebildet. Dadurch wird in vorteilhafter Weise eine unerwünschte magnetische Wechselwirkung der Permanentmagnete des mittigen Bereichs mit Magnetfelderzeugern, welche zwischen den Permanentmagneten des Endbereichs angeordnet sind, vermieden. Umgekehrt wird somit insbesondere in vorteilhafter Weise auch eine entsprechend magnetische Wechselwirkung zwischen den Permanentmagneten der Endbereiche und den Magnetfelderzeugern, welche zwischen den Permanentmagneten des mittigen Bereichs liegen, vermieden. Vorzugsweise ist ein Abstand zwischen dem mittigen Bereich und einem Endbereich größer gleich einem Durchmesser des Magnetfelderzeugers, insbesondere einer Spule.

In einer weiteren Ausführungsform der Erfindung kann vorgesehen sein, dass die Führung eine Querschnittsform mit zwei gegenüberliegenden Verengungen aufweist. Das heißt also insbesondere, dass in einer Querschnittsansicht die Führung an zwei gegenüberliegenden Seiten gegenüberliegend jeweils eine Verengung aufweist. Insofern weist die Führung eine Sanduhrform auf. Dadurch kann in vorteilhafter Weise eine Laufrolle in dieser Verengung anliegen und in dieser Verengung geführt werden. Vorzugsweise sind hier mehrere hintereinander angeordnete Laufrollen vorgesehen.

Die Erfindung wird im Folgenden anhand von bevorzugten Ausführungsbeispielen unter Bezugnahme auf Figuren näher erläutert. Hierbei zeigen
- Fig. 1: eine Statorvorrichtung,
- Fig. 2: ein lineares Transportsystem,
- Fig. 3: eine weitere Statorvorrichtung,
- Fig. 4: einen Statorzahn,
- Fig. 5: einen weiteren Statorzahn,
- Fig. 6: eine Leiterplatte,
- Fig. 7: eine andere Statorvorrichtung,
- Fig. 8: ein weiteres lineares Transportsystem,
- Fig. 9: das lineare Transportsystem gemäß Fig. 8 in einer vereinfachten Darstellung,
- Fig. 10: ein weiteres lineares Transportsystem,
- Fig. 11: eine Ansicht des linearen Transportsystems gemäß Fig. 8,
- Fig. 12: eine weitere Ansicht des linearen Transportsystems gemäß Fig. 8,
- Fig. 13: einen Träger,
- Fig. 14: zwei Reaktionsteile und
- Fig. 15: zwei Reaktionsteile in einer alternativen Ausführungsform.

Im Folgenden können für gleiche Merkmale gleiche Bezugszeichen verwendet werden.

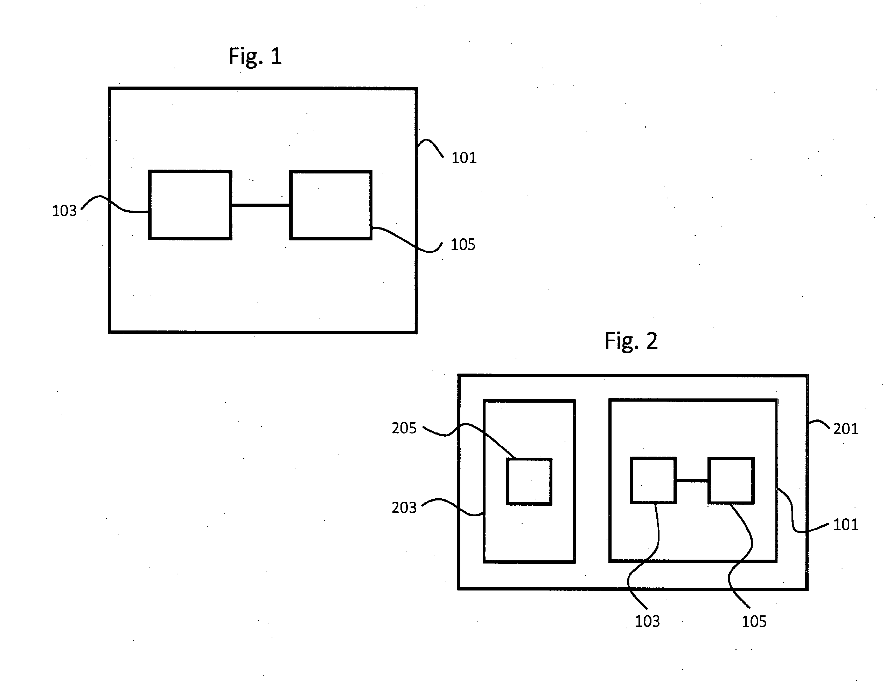

Fig. 1 zeigt eine Statorvorrichtung 101 für einen Linearmotor (nicht gezeigt).

Die Statorvorrichtung 101 umfasst einen Magnetfelderzeuger 103 zum Erzeugen eines Magnetfeldes. Der Magnetfelderzeuger 103 ist elektrisch bestrombar. Das heißt also insbesondere, dass sich bei einer elektrischen Bestromung des Magnetfelderzeugers 103 ein entsprechendes Magnetfeld bildet.

Die Statorvorrichtung 101 umfasst ferner eine erste Halteeinrichtung 105, welche ausgebildet ist, den Magnetfelderzeuger 103 zu halten. Hierbei ist der Magnetfelderzeuger 103 an der ersten Halteeinrichtung 105 befestigt.

Die erste Halteeinrichtung 105 ist als eine Leiterplatte für eine elektrische Kontaktierung des Magnetfelderzeugers 103 gebildet. Insbesondere kann somit der Magnetfelderzeuger 103 mit der Leiterplatte 105 elektrisch verbunden werden, so dass hierüber der Magnetfelderzeuger 103 elektrisch kontaktiert ist.

Fig. 2 zeigt ein lineares Transportsystem 201.

Das lineare Transportsystem 201 umfasst die Statorvorrichtung 101 gemäß Fig. 1. Das lineare Transportsystem 201 weist ferner einen Träger 203 auf, an welchem ein weiterer Magnetfelderzeuger 205 als Reaktionsteil angeordnet ist. Der weitere Magnetfelderzeuger 205 kann beispielsweise einen oder mehrere Permanentmagnete umfassen. Der weitere Magnetfelderzeuger 205 kann alternativ insbesondere ein weichmagnetisches Material umfassen. Der Träger 203 ist insbesondere dafür ausgebildet, an einem Fahrzeug, insbesondere an einem Wagen oder an einem Schlitten, befestigt zu werden. Mittels entsprechender elektromagnetischer Wechselwirkungen zwischen dem Magnetfeld des Magnetfelderzeugers 103 und des weiteren Magnetfelderzeugers 205 kann der Träger 203 und somit ein eventuell daran befestigtes Fahrzeug verlagert werden. In einer nicht gezeigten Ausführungsform kann vorgesehen sein, dass mehrere weitere Magnetfelderzeuger 205 vorgesehen sind.

In einer weiteren nicht gezeigten Ausführungsform kann vorgesehen sein, dass der weitere Magnetfelderzeuger 205 geschrägt angeordnet ist und/oder vorzugsweise eine Trapezform aufweist. Dies bewirkt in vorteilhafter Weise kleinere Kraftrippel im Vergleich zu einem weiteren Magnetfelderzeuger, welcher gerade angeordnet ist und eine Rechteckform aufweist, was weiterhin in vorteilhafter Weise zu einer gleichmäßigeren Bewegung beziehungsweise Verlagerung des Trägers 203 führt.

In einer anderen nicht gezeigten Ausführungsform kann vorgesehen sein, dass anstelle des weiteren Magnetfelderzeugers 205 das Reaktionsteil als eine Struktur aus einem weichmagnetischen Material gebildet ist oder eine solche Struktur umfasst.

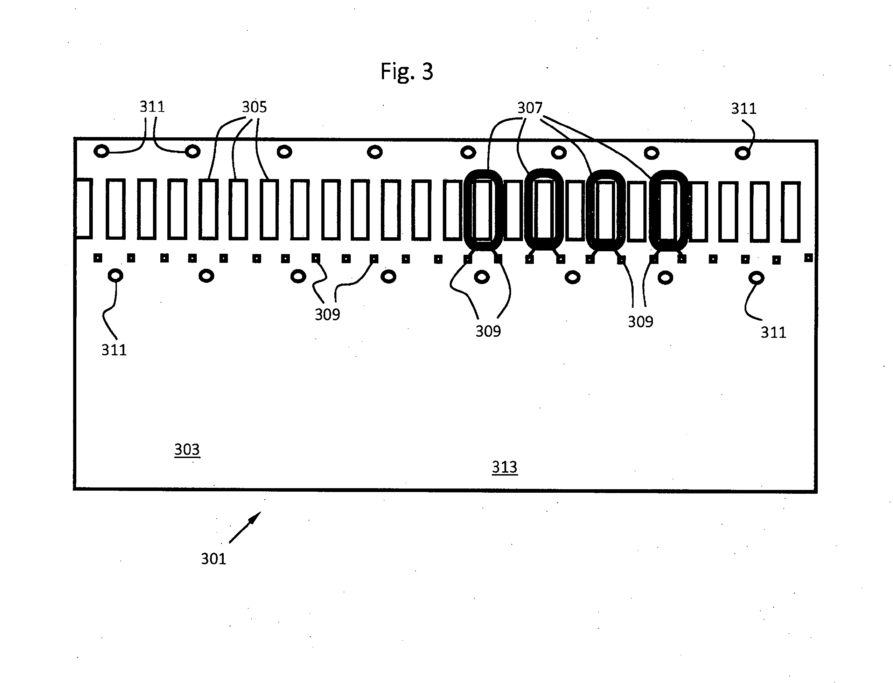

Fig. 3 zeigt eine weitere Statorvorrichtung 301.

Die Statorvorrichtung 301 umfasst eine erste Leiterplatte 303 als erste Halteeinrichtung. Die Leiterplatte 303 weist mehrere erste Aussparungen 305 auf. Die ersten Aussparungen 305 weisen eine Rechteckform auf. Die ersten Aussparungen 305 sind parallel nebeneinander angeordnet, wobei die entsprechenden Querseiten der ersten Aussparungen 305 jeweils auf einer hier nicht dargestellten Linie liegen. Somit ist in vorteilhafter Weise eine geradlinige Anordnung der ersten Aussparungen 305 bewirkt.

Ferner sind mehrere Spulen 307 gebildet, welche jeweils um einen hier nicht gezeigten Statorzahn gewickelt sind. Die Spulen 307 mit den Statorzähnen bilden insofern einen Magnetfelderzeuger. Hierbei wird ein Ende des Statorzahns in die erste Aussparung 305 gesteckt, so dass die ersten Aussparungen 305 die Spulen 307 halten. Hierbei weisen die Statorzähne vorzugsweise eine Rechteckform derart auf, dass diese insbesondere formschlüssig in die ersten Aussparungen 305 passen.

Ferner umfasst die Leiterplatte 303 mehrere Lötpads 309, welche entlang der ersten Aussparungen 305 angeordnet sind. Mittels der Lötpads 309 kann eine elektrische Kontaktierung der Leiterplatte 303 mit den Spulen 307 bewirkt werden. Das heißt also insbesondere, dass die Spulen 307, hier insbesondere entsprechende Spulenenden, mit der Leiterplatte 303 verlötet werden können.

Ferner umfasst die Leiterplatte 303 mehrere Löcher 311 für Durchgangsbohrungen, um so die Leiterplatte 303 an hier nicht gezeigten Profilelementen zu befestigen, insbesondere zu verschrauben. Die Löcher 311 sind in einem Bereich oberhalb und unterhalb der jeweiligen Querseiten der ersten Aussparung 305 gebildet.

Wie Fig. 3 zeigt, ist zwischen zwei Spulen 307 eine erste Aussparung 305 vorgesehen, in welcher kein Statorzahn mit einer Spule, also ein gewickelter Statorzahn, gesteckt ist. Vorzugsweise kann vorgesehen sein, dass diese erste Aussparung 305 zwischen zwei Spulen 307 frei bleibt. In einer alternativen vorteilhaften Ausführungsform kann vorgesehen sein, dass in diese erste Aussparung 305 zwischen zwei Spulen 307 ein ungewickelter Statorzahn gesteckt wird. Dies bewirkt in vorteilhafter Weise eine besondere mechanische Stabilisierung, insbesondere in dem Fall, wenn auf die Leiterplatte 303 eine analog gebildete Leiterplatte deckungsgleich gesetzt wird, so dass die Statorzähne ebenfalls in entsprechende Aussparungen der zweiten Leiterplatte gesteckt werden können. Die Aussparungen der zweiten Leiterplatte können insbesondere als zweite Aussparungen bezeichnet werden.

Eine solche zweite Leiterplatte bildet insofern in vorteilhafter Weise eine zweite Halteeinrichtung zum Halten der Spulen 307, wobei die Spulen 307 zwischen den beiden Leiterplatten angeordnet sind.

Die zweite Leiterplatte kann vorzugsweise lötpadfrei sein. Das heißt also insbesondere, dass die zweite Leiterplatte keine Lötpads für eine elektrische Kontaktierung der Spulen 307 aufweist. Die elektrische Kontaktierung der Spulen 307 findet dann insofern lediglich über die erste Leiterplatte 303 statt.

In einem Bereich 313, welcher einem Leiterplattenbereich unterhalb den ersten Aussparungen 305 gegenüberliegt, ist nach einem Anordnen der zweiten Leiterplatte auf die erste Leiterplatte 303 mittels Verschraubung bzw. Befestigen der Leiterplatten in entsprechende hier nicht gezeigte Profilelemente ein Einbauraum, auch Bauraum bezeichnet, gebildet, in welchem beispielsweise eine Ansteuerungselektronik und/oder eine Leistungselektronik und/oder eine Erfassungssystemelektronik eines Positionserfassungssystems eingebaut werden können. Es werden hier vorzugsweise Signale gemessen, aus welchen insbesondere mittels einer übergeordneten Steuerung eine Position eines Fahrzeugs berechnet werden kann.

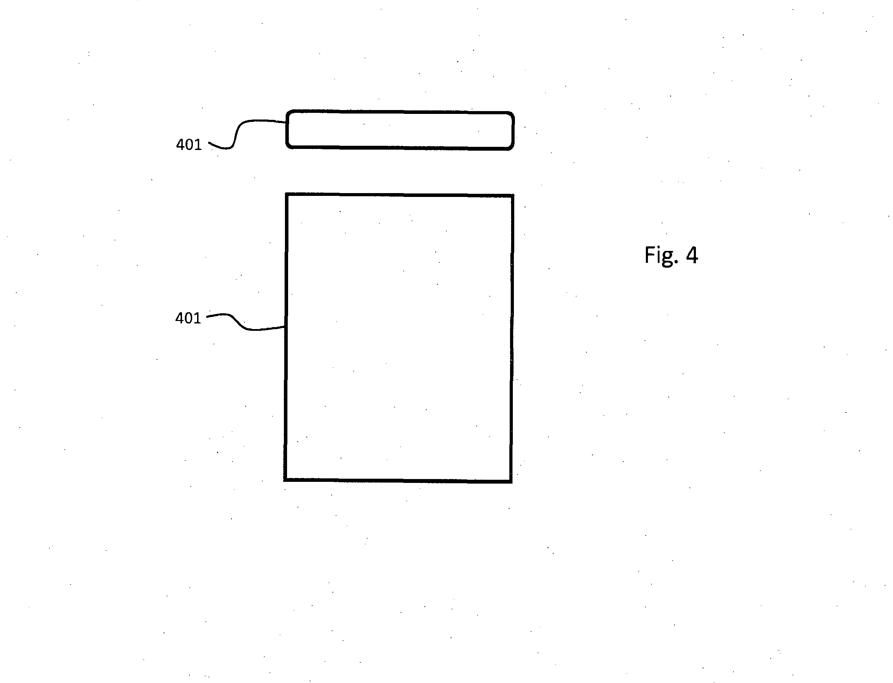

Fig. 4 zeigt einen Statorzahn 401. Die obere Zeichnung in Fig. 4 zeigt den Statorzahn 401 in einer Draufsicht. Unterhalb der Draufsicht ist eine Seitenansicht des Statorzahns 401 gezeigt.

Der Statorzahn 401 weist eine Rechteckform auf. In einer nicht gezeigten Ausführungsform kann vorgesehen sein, dass der Statorzahn 401 eine Quadratform aufweist. Der Statorzahn 401 gemäß Fig. 4 ist insbesondere ausgebildet, um in die ersten und zweiten Aussparungen der beiden Leiterplatten gemäß der Statorvorrichtung 301 in Fig. 3 eingesteckt zu werden.

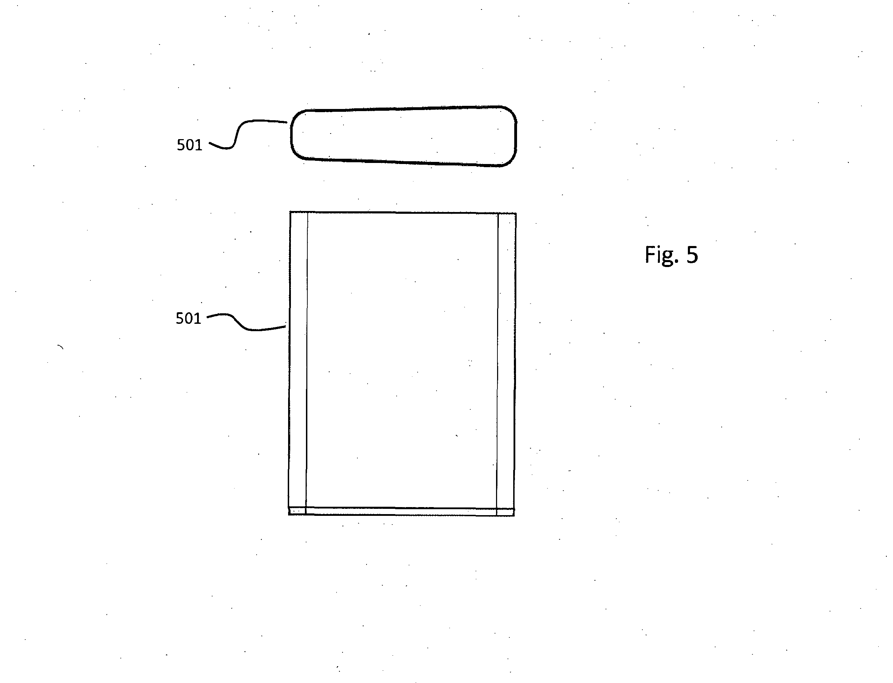

Fig. 5 zeigt einen weiteren Statorzahn 501. Die obere Zeichnung in Fig. 5 zeigt eine Draufsicht des Statorzahns 501. Die Zeichnung unterhalb der Draufsicht zeigt eine Seitenansicht des Statorzahns 501.

Wie Fig. 5 zeigt, weist der Statorzahn 501 eine Trapezform auf. Der Statorzahn 501 ist insbesondere dafür ausgebildet, in Aussparungen eingesetzt zu werden, welche eine entsprechende Form derart aufweisen, dass der Statorzahn 501 formschlüssig in diese Aussparung gesteckt werden kann. Mittels solcher Aussparungen kann dann beispielsweise in vorteilhafter Weise auch eine Kurve gebildet werden, insofern die mehreren Aussparungen entlang einer Kurve angeordnet sind.

Die beiden geometrischen Formen der Statorzähne 401 und 501 gemäß Fig. 4 und 5 sind nur als beispielhafte Ausführungsformen zu verstehen und nicht als einschränkend. Es sind insbesondere auch diverse andere geometrische Formen möglich.

Bei der in Fig. 4 und 5 beispielhaft gezeigten Ausführungsform kann der Statorzahn aus einem Sintermaterial gefertigt sein. Somit lässt sich ein solcher Statorzahn auch mit einem einfachen Sinterwerkzeug aus einem Sintermaterial fertigen.

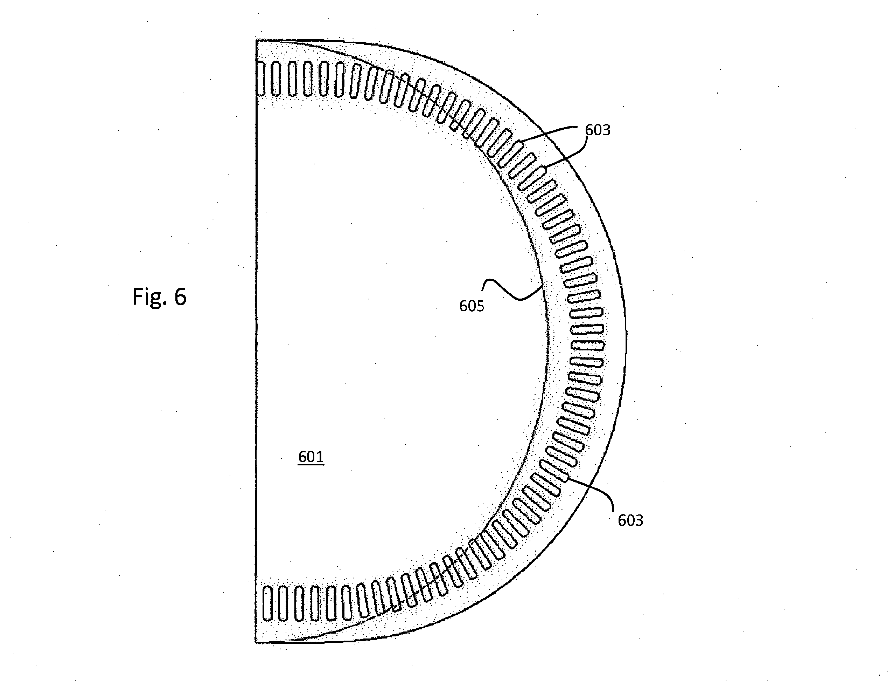

Fig. 6 zeigt eine als Leiterplatte 601 ausgebildete Halteeinrichtung mit entsprechend gebildeten Aussparungen, in welchen vorzugsweise die Statorzähne 501 gesteckt werden können. Die Aussparungen sind in Fig. 6 mit dem Bezugszeichen 603 gekennzeichnet. Sie sind hier entlang einer Kurve angeordnet, welche eine Klothoidenform aufweist. Eine Klothoide ist insbesondere eine Kurve, bei der ein Radius am Anfang größer und später kleiner ist als ein mittlerer Radius. Das heißt also insbesondere, dass ein Krümmungsverlauf der Klothoide linear zunimmt. Damit wird in vorteilhafter Weise eine ruckfreie Fahrdynamik eines Fahrzeugs bewirkt. Als Vergleich dazu ist hier eine Halbkreiskurve mit dem Bezugszeichen 605 eingezeichnet.

Die Leiterplatte 601 kann analog zu der Leiterplatte 303 vorzugsweise Lötpads und/oder Löcher für Durchgangsbohrungen aufweisen. Analog zu der Statorvorrichtung 301 gemäß Fig. 3 kann eine weitere Leiterplatte vorgesehen sein, welche analog zu der Leiterplatte 601 gebildet ist. Diese beiden Leiterplatten können dann vorzugsweise insofern übereinander deckungsgleich angeordnet werden und insbesondere an hier nicht gezeigten bogenförmigen Profilelementen verschraubt bzw. befestigt werden. Die Statorzähne 501 sind dann in den Aussparungen 603 gesteckt und entsprechend fixiert, wobei um zumindest einem Teil der Statorzähne 501 Spulen gewickelt sind.

In einer nicht gezeigten Ausführungsform kann vorgesehen sein, dass in ersten Aussparungen einer ersten Leiterplatte Statorzähne gesteckt und fixiert werden, wobei eine Fixierung insbesondere mittels eines Formschlusses bewirkt werden kann. Anschließend kann vorgesehen sein, dass um die Statorzähne die einzelnen Spulen gewickelt werden. Alternativ kann vorgesehen sein, dass im Vorfeld gewickelte Spulen auf fixierte Statorzähne aufgeschoben werden. Alternativ kann vorgesehen sein, dass einzelne Statorzähne im Vorfeld mit einer Spule umwickelt werden und dann die fertige Baueinheit Statorzahn mit Spule in die Leiterplatte gesteckt und fixiert wird. Insbesondere wenn nur um jeden zweiten Statorzahn eine Spule gewickelt wird, kann ein Kupferfüllfaktor der Spulen bzw. des Spulenwickelraums von über 60% erreicht werden.

Die in Fig. 3 und 6 gezeigten Geometrien entsprechend der Anordnung der Aussparungen, also einmal eine lineare Anordnung und einmal eine Anordnung in einer Klothoidenform, sollen lediglich als beispielhaft und nicht als einschränkend verstanden werden. In nicht gezeigten Ausführungsformen können beliebige Geometrien entsprechend einer Anordnung der Aussparungen vorgesehen sein. Solche Geometrien können beispielsweise ein Bogen, ein Kreis oder ein Kreissegment sein. Für bogenförmige Geometrien werden vorzugsweise trapezförmige Statorzähne verwendet. Auch können vorzugsweise dreidimensionale geometrische Anordnungen vorgesehen sein, insofern die Halteeinrichtungen entsprechende dreidimensionale Geometrien aufweisen.

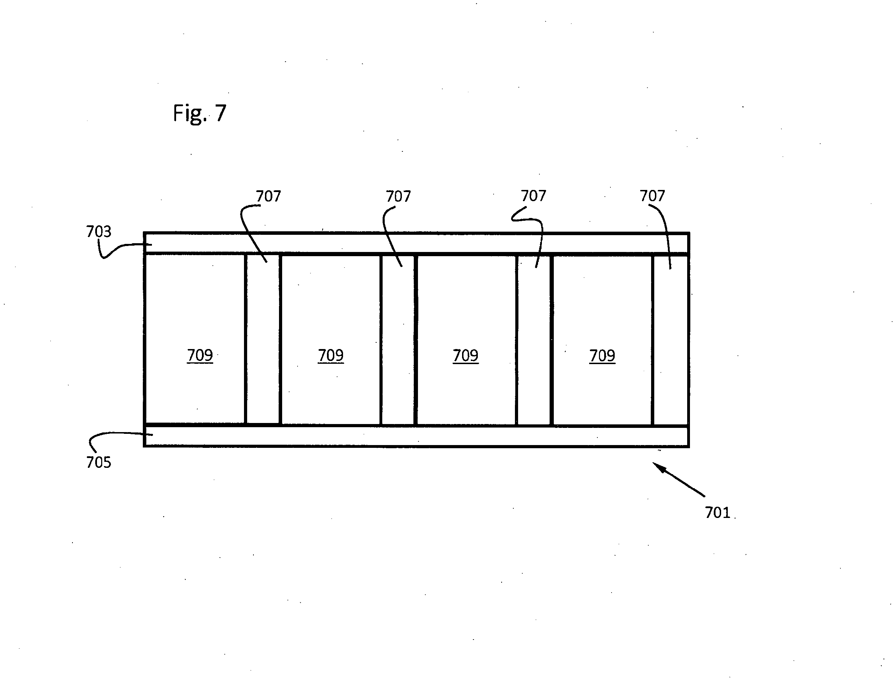

Fig. 7 zeigt eine weitere Statorvorrichtung 701 in einer Draufsicht.

Die Statorvorrichtung 701 umfasst eine erste Leiterplatte 703 und eine zweite Leiterplatte 705 als erste und zweite Halteeinrichtungen. Die beiden Leiterplatten 703 und 705 sind parallel zueinander und gegenüberliegend angeordnet. Beide Leiterplatten 703 und 705 weisen entsprechend erste und zweite Aussparungen auf, welche gegenüberliegend angeordnet sind. Diese Aussparungen sind in Fig. 7 nicht gezeigt. In diesen Aussparungen sind Statorzähne 707 gesteckt, wobei um jeden zweiten Statorzahn 707 eine Spule 709 gewickelt ist. Da die Spule 709 den entsprechenden Statorzahn 707 verdeckt, ist dieser in den Spulen 709 nicht explizit eingezeichnet. Das heißt also insbesondere, dass alternierend eine Spule 709 und ein ungewickelter Statorzahn 707 vorgesehen sind. Das heißt also insbesondere, dass alternierend jeweils ein gewickelter Statorzahn und ein nicht gewickelter beziehungsweise ungewickelter Statorzahn vorgesehen sind.

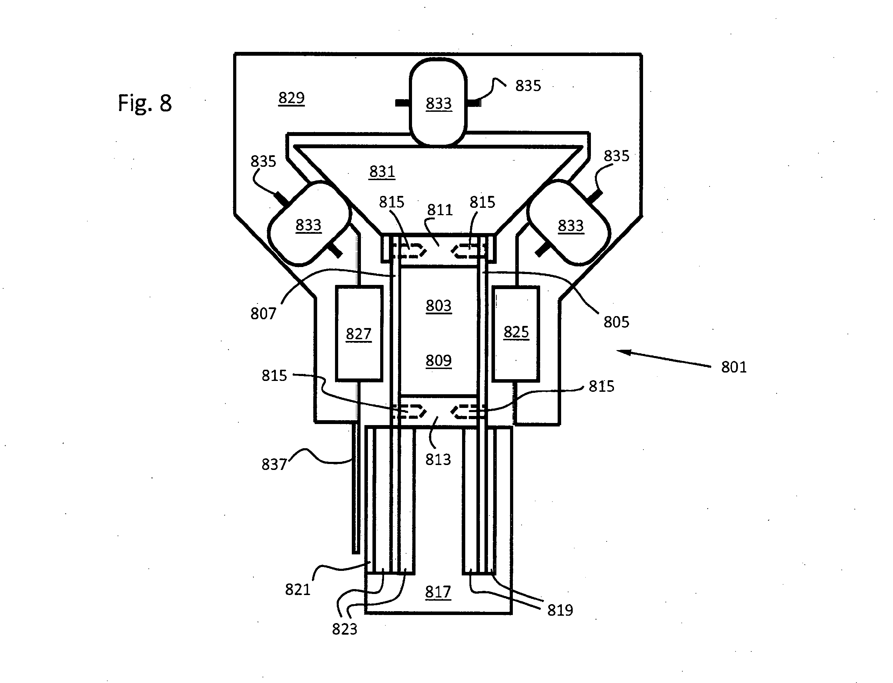

Fig. 8 zeigt ein lineares Transportsystem 801 in einer frontalen Querschnittsansicht.

Das lineare Transportsystem 801 umfasst eine Statorvorrichtung 803. Die Statorvorrichtung 803 umfasst eine erste Leiterplatte 805 und eine zweite Leiterplatte 807, welche parallel zueinander und gegenüberliegend angeordnet sind. Die Statorvorrichtung 803 mit den beiden Leiterplatten 805 und 807 kann insbesondere analog zu der Statorvorrichtung 701 mit den beiden Leiterplatten 703 und 705 gemäß Fig. 7 gebildet sein. Entsprechende in Zusammenhang mit Fig. 7 gemachten Ausführungen gelten vorzugsweise analog für die Statorvorrichtung 803.

Ein Bereich zwischen den beiden Leiterplatten 805 und 807 der Statorvorrichtung 803 ist mit dem Bezugszeichen 809 gekennzeichnet und kann als ein Spulenbereich bezeichnet werden, insofern in diesem Bereich mehrere Spulen angeordnet sind. Hierbei sind diese Spulen um Statorzähne gewickelt, welche in entsprechende Aussparungen der beiden Leiterplatten 805 und 807 gesteckt sind. Hier kann wiederum auf die Fig. 7 verwiesen werden, in der eine solche Spulenanordnung übersichtlich gezeigt ist.

Oberhalb des Spulenbereichs 809 ist ein Profilelement 811 gebildet. Unterhalb des Spulenbereichs 809 ist ebenfalls ein Profilelement 813 gebildet, welches parallel zu dem Profilelement 811 verläuft. Die beiden Profilelemente 811 und 813 weisen eine Längsausdehnung analog zu den beiden Leiterplatten 805 und 807 auf, so dass mittels Schrauben 815 die beiden Leiterplatten 805 und 807 an die beiden Profilelemente 811 und 813 geschraubt werden können. Hierfür weisen die beiden Leiterplatten 805 und 807 entsprechende hier nicht gezeigte Löcher auf. Beide Profilelemente 811 und 813 stützen in vorteilhafter Weise die beiden Leiterplatten 805 und 807 und bewirken in vorteilhafter Weise insbesondere eine mechanische Stabilisierung der Statorvorrichtung 803. Beide Profilelemente 811 und 813 können insofern vorzugsweise als Stützprofilelemente bezeichnet werden. Beide Profilelemente 811 und 813 sind insbesondere in einem ausreichenden nahen Abstand für eine thermische Kopplung zwischen den Spulen und den Profilelementen 811 und 813 angeordnet, so dass in vorteilhafter Weise thermische Energie, welche im Betrieb der Spulen, also insbesondere bei Bestromung, gebildet wird, abgeführt werden kann, so dass eine Überhitzung der Spulen wirksam vermieden werden kann. Beide Profilelemente 811 und 813 können insofern auch vorzugsweise als ein thermischer Energieabführer zum Abführen von thermischer Energie bezeichnet werden.

Unterhalb des Profilelements 813 ist ein Trägerprofilelement 817 gebildet, auf welchem das Profilelement 813 angeordnet beziehungsweise befestigt ist. Das heißt also insbesondere, dass das Trägerprofilelement 817 die Statorvorrichtung 803 trägt. In einer nicht gezeigten Ausführungsform kann vorgesehen sein, dass das Profilelement 813 und das Trägerprofilelement 817 als ein gemeinsames Profilelement gebildet sind. Das Trägerprofilelement 817 kann insbesondere einen Hohlraum aufweisen, in welchem die beiden Leiterplatten 805 und 807 hineinragen, wobei in diesem Hohlraum beziehungsweise Einbauraum eine Leistungselektronik 819 und/oder eine Positionserfassungssystemelektronik 823 eines Positionserfassungssystems angeordnet sein können. Ein solcher Hohlraum ist hier analog insbesondere benachbart zu dem Bereich 313 der Leiterplatte 303 gemäß der Statorvorrichtung 301 in Fig. 3 gebildet. Das Element mit dem Bezugszeichen 821 kennzeichnet eine Leiterplatte der Positionserfassungssystemelektronik 823.

Das lineare Transportsystem 801 umfasst ferner zwei Dauermagnete, welche auch als Permanentmagnete 825 und 827 bezeichnet werden können. Die beiden Permanentmagnete 825 und 827 sind jeweils benachbart zu dem Spulenbereich 809 angeordnet. Das heißt also insbesondere, dass sich der Permanentmagnet 825 rechts von der Leiterplatte 805 befindet. Der Permanentmagnet 827 befindet sich links neben der Leiterplatte 807. Hierbei sind die beiden Permanentmagnete 825 und 827 beabstandet zu den entsprechenden Leiterplatten 805 und 807 angeordnet. Es ist insofern jeweils ein Spalt zwischen den Permanentmagneten 825 und 827 und den Leiterplatten 805 und 807 gebildet. Eine solche Anordnung gemäß Fig. 8 kann daher auch als eine Doppelspaltanordnung bezeichnet werden.

In einer nicht gezeigten Ausführungsform können auch mehrere Permanentmagnete 825 und 827 vorgesehen sein, welche jeweils links und rechts der entsprechenden Leiterplatten 805 und 807 angeordnet sind.

Die Permanentmagnete 825 und 827 sind jeweils von einem hier nicht im Detail dargestellten Träger gehalten, wobei an den beiden Trägern ein Fahrzeug 829 befestigt ist.

Ferner ist auf dem Profilelement 811, welches sich oberhalb des Spulenbereichs 809 befindet, eine Führung 831 für das Fahrzeug 829 angeordnet. Das Profilelement 811 kann insofern insbesondere auch in Verbindung mit den Leiterplatten 805 und 807 als eine Aufnahmeeinrichtung zur Befestigung einer Führung zum Führen eines Fahrzeugs bezeichnet werden.

Die Führung 831 weist eine Trapezform auf, wobei an drei Seiten des Trapezes jeweils eine Laufrolle 833 mit entsprechender Laufachse 835 anliegt. Die Laufrollen 833 sind an dem Fahrzeug 829 angeordnet, so dass hierüber eine rollende Bewegung des Fahrzeugs 829 entlang der Führung 831 ermöglicht ist. Die Ausführung der Laufrollen 833 in Lage, Anordnung, Geometrie und Anzahl kann ohne Einschränkung auch in anderen hier nicht gezeigten Ausführungsformen in beliebiger Variation erfolgen.

In einer nicht gezeigten Ausführungsform kann zusätzlich oder anstelle vorgesehen sein, dass das Fahrzeug magnetgelagert und/oder fluidgelagert, insbesondere gasgelagert, vorzugsweise luftgelagert, entlang der Führung 831 geführt wird.

An dem Träger, welcher den Permanentmagneten 827 hält, ist ein Positionsdetektionselement 837 in Form eines langgestreckten flächigen Elements gebildet. Dieses Element verläuft verlängernd nach unten weg von dem Fahrzeug 829 in Richtung des Trägerprofilelements 817 und ist gegenüber der Positionserfassungssystemelektronik 823 angeordnet. Die Positionserfassungssystemelektronik 823 ist insbesondere dafür ausgebildet, eine Anwesenheit des Positionsdetektionselements 837 zu detektieren, so dass hierüber in vorteilhafter Weise eine Position des Fahrzeugs 829 bestimmt werden kann. Aus den gemessenen Signalen kann vorzugsweise an anderer Stelle, zum Beispiel mittels einer übergeordneten Steuerung, eine Position berechnet werden.

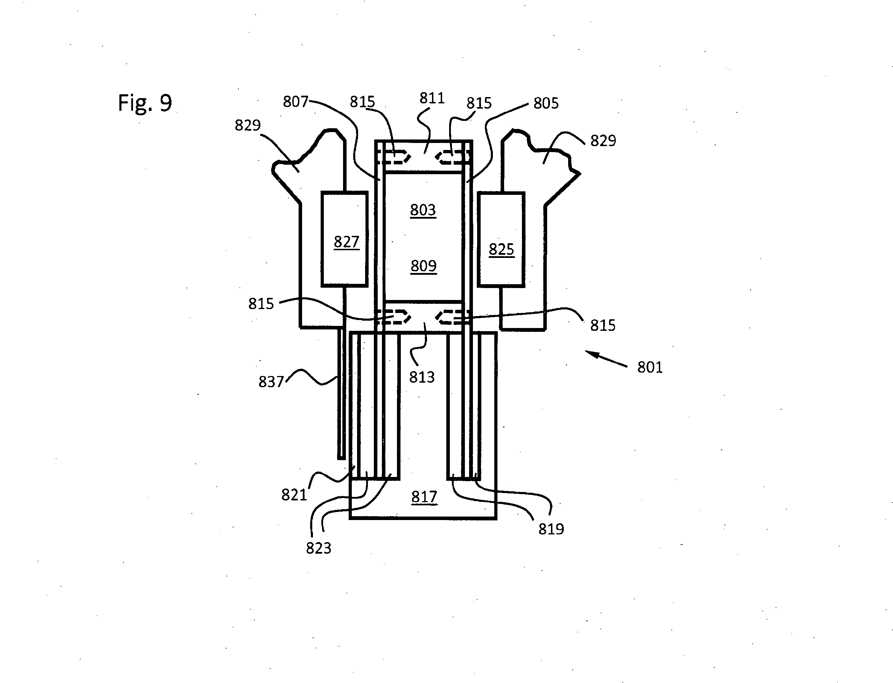

Fig. 9 zeigt das lineare Transportsystem 801 gemäß Fig. 8 in einer etwas vereinfachten Darstellung, insofern hier das Fahrzeug 829 mit der Führung 831 und den Laufrollen 833 nicht als Ganzes dargestellt ist. Es soll hier insbesondere angemerkt werden, dass das lineare Transportsystem 801 auch ohne das Fahrzeug 829, eine Führung 831 und eine eventuelle separate Aufnahmeeinrichtung für eine Befestigung der Führung, also ein von dem Profilelement 811 separates Element, offenbart ist.

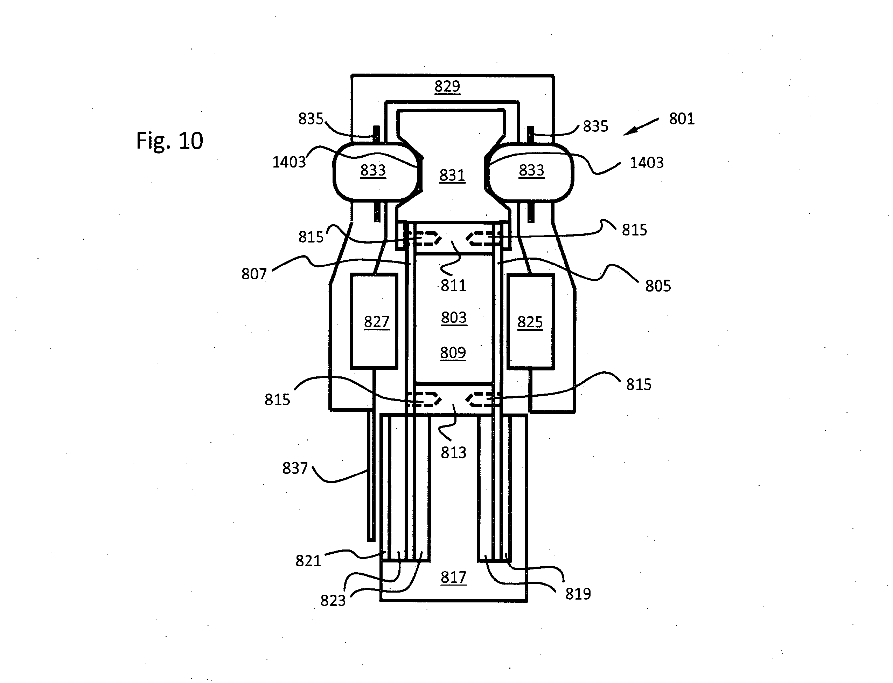

Fig. 10 zeigt ein weiteres lineares Transportsystem 801, welches im Wesentlichen analog zu dem linearen Transportsystem 801 gemäß Fig. 8 gebildet ist.

Als ein Unterschied zu dem linearen Transportsystem 801 gemäß Fig. 8 weist die Führung 831 im Querschnitt zwei gegenüberliegende Verengungen 1403 auf. Das heißt also insbesondere, dass im Querschnitt die Führung 831 eine Sanduhrform aufweist. In diesen Verengungen 1403 können dann in vorteilhafter Weise die Laufrollen 833 anliegen und in diesen Verengungen 1403 entlanglaufen.

Die in Fig. 10 gezeigte Ausführungsformen der Laufrollen 833 in Lage, Anordnung, Geometrie und Anzahl sind nur beispielhaft und nicht einschränkend zu verstehen.

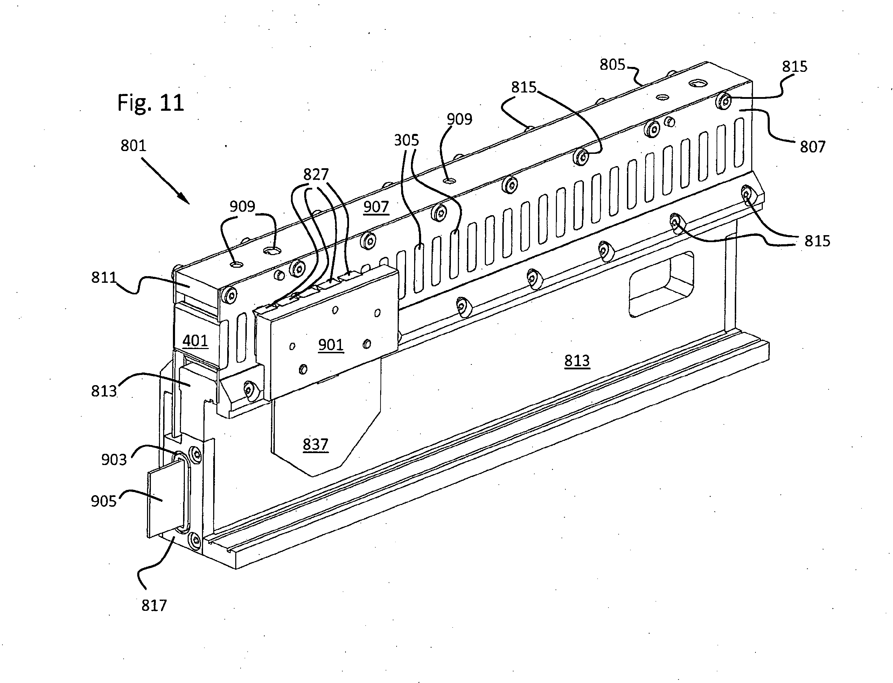

Fig. 11 zeigt eine schräge Draufsicht auf das lineare Transportsystem 801 gemäß Fig. 8, 9 und 10, wobei hier entsprechend den vorherigen Ausführungen das Fahrzeug 829 und die Führung 831 der Übersicht halber nicht gezeigt sind.

Die Fig. 11 zeigt den Träger 901, welcher mehrere Permanentmagnete 827 hält. Detaillierter gezeigt ist auch das Positionsdetektionselement 837, welches insbesondere als eine Dämpfungsplatine ausgebildet sein kann.

Das Trägerprofilelement 817 weist an einem Längsende eine Öffnung 903 auf, in welche eine Kontaktierungsleiterplatte 905 geschoben werden kann. Mittels dieser Kontaktierungsleiterplatte 905 ist eine elektrische Kontaktierung der Leiterplatten 805 und/oder 807 ermöglicht.

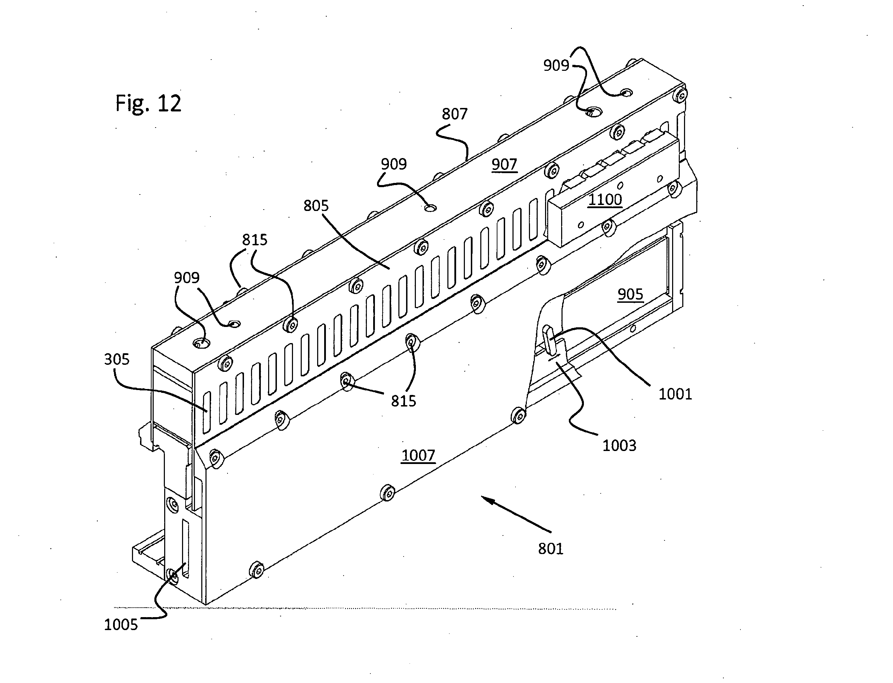

Fig. 12 zeigt eine schräge Draufsicht entsprechend einer Rückansicht bezogen auf die Ansicht gemäß Fig. 11 des linearen Transportsystems 801. An einem dem Längsende mit der Öffnung 903 gegenüberliegenden Längsende ist eine weitere Öffnung 1005 vorgesehen, in welche eine weitere nicht gezeigte Kontaktierungsleiterplatte eines vorangestellten hier nicht gezeigten weiteren linearen Transportsystems eingeschoben werden kann. Somit ist in vorteilhafter Weise eine elektrische Verbindung zu einem weiteren linearen Transportsystem ermöglicht, welches analog zu dem linearen Transportsystem 801 gebildet sein kann. Es kann somit in vorteilhafter Weise ein modulares System gebildet werden, wobei die einzelnen Module aus den linearen Transportsystemen 801 gebildet sein können.

Fig. 12 zeigt des Weiteren ein Verschiebemittel 1001, welches mit der Kontaktierungsleiterplatte 905 derart zusammenwirkt, dass dadurch eine Längsverschiebung der Kontaktierungsleiterplatte 905 bewirkt ist. Diese Verschiebung ist hier mittels eines Doppelpfeils mit dem Bezugszeichen 1003 symbolisch gekennzeichnet. Um das Verschiebemittel 1001 sehen zu können, ist in dem entsprechenden Bereich eine Abdeckplatte 1007 der Übersicht halber symbolisch aufgeschnitten gezeichnet.

Eine solche Kontaktierungsleiterplatte weist insbesondere folgende Wirkung bzw. Funktion auf. Zwei lineare Transportsysteme können so in Längsrichtung nebeneinander an einem Halteprofil befestigt werden, wobei durch das Verschieben der Platine bzw. Kontaktierungsleiterplatte 905 von einem System in das nächste System automatisch das nebenliegende System kontaktiert wird. Das heißt also insbesondere, dass mittels einer Platine 905 zwei lineare Transportsysteme kontaktiert werden können. Hinter der Öffnung 1005 befindet sich beispielsweise ein aus mehreren Federkontakten bestehender Stecker, so dass die eingeschobene Platine 905 in der Position gehalten und kontaktiert wird. Dies bietet insbesondere den Vorteil, dass die einzelnen Module bzw. Transportsysteme im Servicefall zur Seite hin entnommen werden können, ohne die Module auseinanderschieben zu müssen. Weiterhin benötigt das Gesamtsystem umfassend die beiden oder auch noch weitere lineare Transportsysteme dann auch nur eine Anschlussleitung zur Spannungsversorgung und zur Verbindung mit einer übergeordneten Steuerung.

Fig. 11 und 12 zeigen ferner eine Oberfläche 907 des Profilelements 811, wobei die Oberfläche 907 mehrere Aussparungen 909 aufweist, in welchen Schrauben und/oder Nieten und/oder Passstifte gesteckt beziehungsweise geschraubt werden können, um die Führung 831 an dem Profilelement 811 zu befestigen.

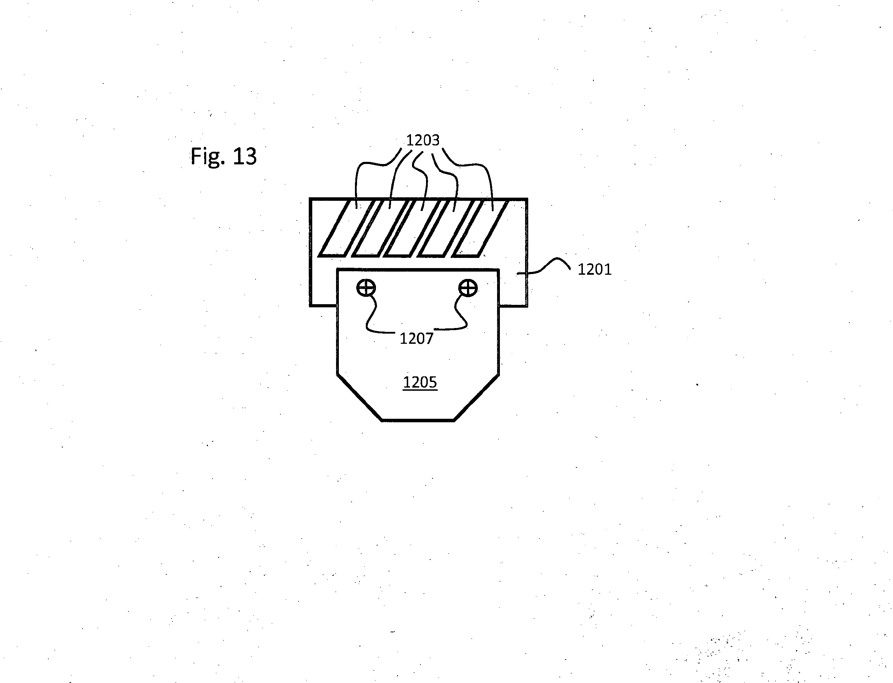

Fig. 13 zeigt einen Träger 1201 umfassend mehrere trapezförmige Permanentmagnete 1203. Der Träger 1201 kann vorzugsweise auch als ein Magnetträger bezeichnet werden.

Unterhalb der Permanentmagnete 1203 ist ein Positionsdetektionselement 1205 angeordnet, welches mittels Schrauben 1207 an dem Träger 1201 verschraubt ist.

Ein solcher Träger 1201 kann insbesondere in dem linearen Transportsystem 801 verwendet werden. Vorzugsweise ist der Träger 901 gemäß Fig. 11 analog zum Träger 1201 gebildet.

Ein Fahrzeug kann dann vorzugsweise an dem Träger 1201 befestigt werden.

Die Trapezform der Permanentmagnete 1203 bewirkt in vorteilhafter Weise kleinere Kraftrippel im Vergleich zu Permanentmagnete in Rechteckform, was weiterhin in vorteilhafter Weise zu einer gleichmäßigeren Bewegung beziehungsweise Verlagerung des Trägers 1201 führt.

In Fig. 12 ist mit dem Bezugszeichen 1100 eine alternative Ausführungsform des Trägers dargestellt, welche analog zum Träger 1201 gemäß Fig. 13 gebildet ist, aber ohne das Positionsdetektionselement 1205.

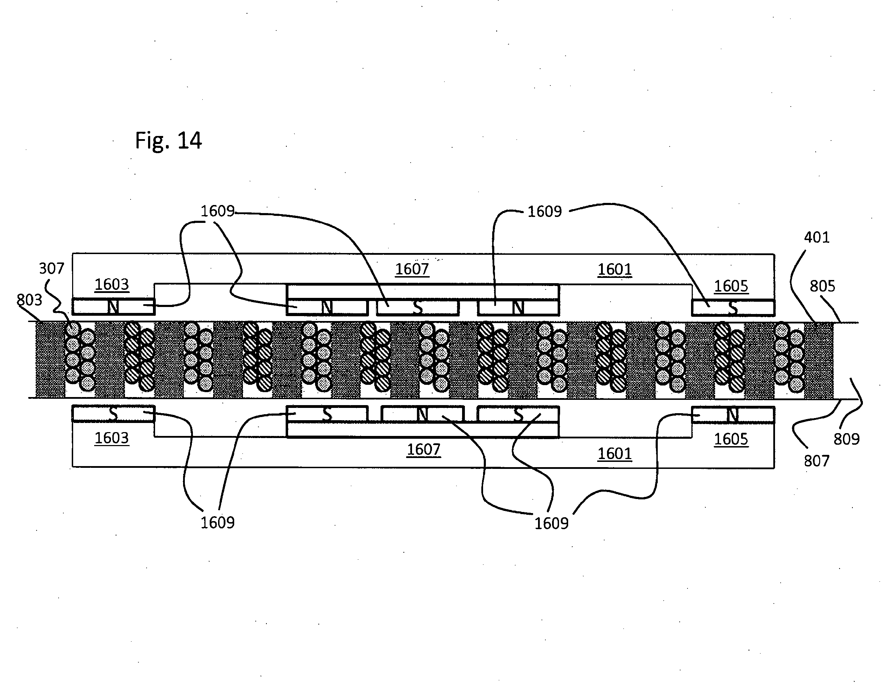

Fig. 14 zeigt zwei Träger 1601 für ein Reaktionsteil jeweils umfassend mehrere Permanentmagneten 1609. Entsprechende Nord- und Südpole der Permanentmagnete 1609 sind mit den Buchstaben "N" und "S" gekennzeichnet.

Die beiden Träger 1601 weisen jeweils zwei gegenüberliegende Endbereiche 1603 und 1605 auf. Zwischen den beiden Endbereichen 1603 und 1605 ist jeweils ein mittiger Bereich 1607 gebildet.

Hierbei sind die Permanentmagnete 1609 in dem mittigen Bereich 1607 und in den Endbereichen 1603 und 1605 angeordnet. Es ist insbesondere vorgesehen, dass zwischen den Endbereichen 1603 und 1605 und dem mittigen Bereich 1607 jeweils ein Zwischenbereich gebildet ist, in welchem kein Permanentmagnet angeordnet ist. Dieser Zwischenbereich ist insofern magnetlos. Ein Abstand zwischen den Endbereichen 1603 und 1605 und dem mittigen Bereich 1607 ist vorzugsweise größer gleich einem Durchmesser einer Spule 307, das heißt also insbesondere größer gleich einer Spulenbreite. Dadurch werden in vorteilhafter Weise Wechselwirkungen der einzelnen Permanentmagnete 1609 mit den zugehörigen Spulen 307 der verschiedenen Bereiche 1603, 1605 und 1607 in vorteilhafter Weise vermieden oder zumindest verringert.

Die beiden Träger 1601 sind an gegenüberliegenden Seiten der Statorvorrichtung 803 benachbart und beabstandet zu dieser angeordnet. Die einzelnen Spulen 307 werden entsprechend bestromt, so dass eine Vorschubkraft mittels der Wechselwirkung zwischen den Permanentmagneten 1609 des mittigen Bereichs 1607 und den entsprechend dazwischen angeordneten Spulen 307 gebildet wird.

Die Permanentmagnete 1609, welche in den Endbereichen 1603 und 1605 angeordnet sind, wechselwirken ebenfalls mit den dazwischenliegenden Spulen 307, welche entsprechend bestromt werden, so dass hier eine abstoßende Kraft zwischen den Trägern 1601 und der Statorvorrichtung 803 gebildet wird. Es findet hier insofern eine Magnetschwebung statt. Dies bewirkt in vorteilhafter Weise eine mechanische Entlastung bezüglich einer Führung. Diese Führung ist hier der Übersicht halber nicht gezeigt. Das heißt also insbesondere, dass mittels der hier gebildeten Magnetschwebung insbesondere entsprechende Laufrollen in der entsprechenden Führung mechanisch entlastet werden, so dass in vorteilhafter Weise insbesondere ein Verschleiß der Laufrollen verringert bzw. vermieden wird.

In einer nicht gezeigten Ausführungsform kann vorgesehen sein, dass lediglich ein Träger 1601 vorgesehen ist.

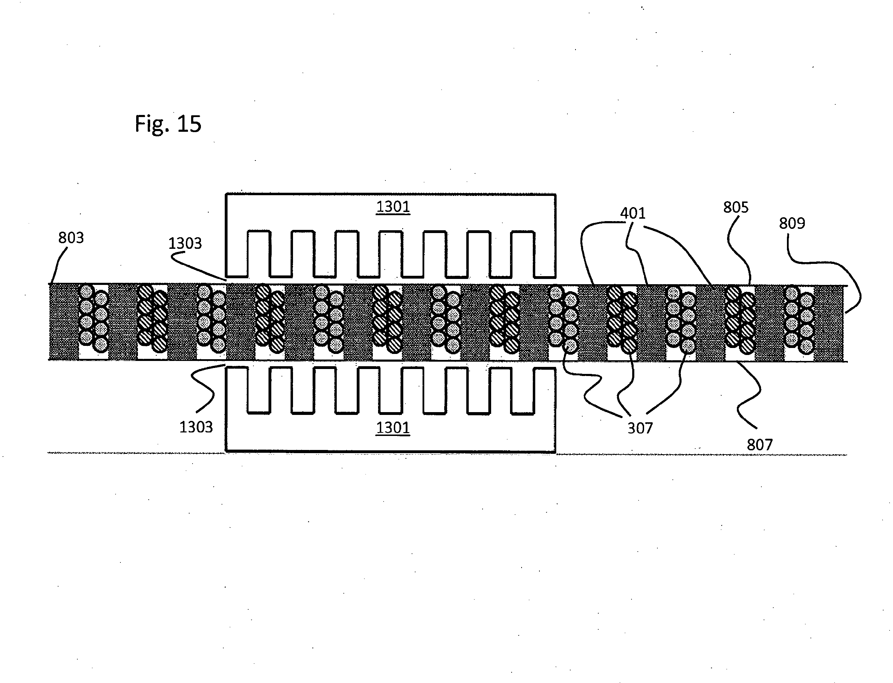

Fig. 15 zeigt zwei Reaktionsteile 1301, welche jeweils von einem hier nicht dargestellten Träger gehalten sind. Ein solcher Träger kann beispielsweise an ein ebenfalls hier nicht gezeigtes Fahrzeug bzw. Schlitten befestigt sein.

Die beiden Reaktionsteile 1301 sind als eine kammförmige Struktur aus einem weichmagnetischen Material gebildet. Hierbei sind die beiden kammförmigen Strukturen 1301 gegenüberliegend angeordnet, wobei sich zwischen den beiden Reaktionsteilen 1301 die Statorvorrichtung 803 befindet. Dadurch ist in vorteilhafter Weise ein Linearmotor gebildet, welcher nach dem Reluktanzprinzip arbeitet. Der Linearmotor kann insofern insbesondere als ein Reluktanzmotor bezeichnet werden.

Zwischen den Reaktionsteilen 1301 und der Statorvorrichtung 803 ist jeweils ein Spalt 1303 gebildet. Das heißt also insbesondere, dass die beiden Reaktionsteile 1301 beabstandet von der Statorvorrichtung 803 angeordnet sind. Die mittels eines solchen Reluktanzmotors erreichbare Vorschubkraft hängt insbesondere von der Größe des Spalts 1303, also dem Abstand zwischen den Reaktionsteilen 1301 und der Statorvorrichtung 803, ab. Je kleiner der Spalt 1303 ist, umso größer ist in der Regel die erreichbare Vorschubkraft.

In einem nicht gezeigten Ausführungsbeispiel kann lediglich ein Reaktionsteil 1301 vorgesehen sein, so dass entsprechend nur ein Spalt 1303 zwischen dem Reaktionsteil 1301 und der Statorvorrichtung 803 gebildet ist.

Durch das Vorsehen eines weichmagnetischen Materials im Gegensatz zum Vorsehen von Permanentmagneten an dem Träger sind relativ dazu höhere Geschwindigkeiten des Trägers bzw. des Fahrzeugs ermöglicht. Dies resultiert insbesondere darin, dass eine durch die Permanentmagnete in den Spulen 307 der Statorvorrichtung 803 induzierte Gegenspannung nicht mehr gebildet wird.

In einer nicht gezeigten Ausführungsform kann vorgesehen sein, dass ein oder zwei Träger vorgesehen sind, welche aus einem weichmagnetischen Material gebildet sind.

## Patentansprüche

1. Lineares Transportsystem (801)
mit einer Statorvorrichtung (101, 301, 701, 803) für einen Linearmotor, die
einen elektrisch bestrombaren Magnetfelderzeuger (103, 707; 709) zum Bilden eines Magnetfeldes, und
eine erste Halteeinrichtung (105, 303, 703, 805) zum Halten des Magnetfelderzeugers (103, 707; 709)
aufweist,
wobei der Magnetfelderzeuger (103, 707; 709) an der ersten Halteeinrichtung (105, 303, 703, 805) befestigt ist,
wobei die erste Halteeinrichtung (105, 303, 703, 805) zumindest teilweise aus einem elektrisch und/oder magnetisch nicht-leitenden Material gebildet ist,
und
wobei die erste Halteeinrichtung (105, 303, 703, 805) als eine Leiterplatte (303, 601, 703, 705, 805, 807) für eine elektrische Kontaktierung des Magnetfelderzeugers (103, 707; 709) gebildet ist, und
mit einem Trägerprofilelement (817),
**dadurch gekennzeichnet,**
**dass** die erste Halteeinrichtung (303, 601, 703, 805) eine Leistungselektronik (819) zur Ansteuerung des Magnetfelderzeugers (103, 707; 709) aufweist, wobei die als Leiterplatte ausgebildete erste Halteeinrichtung in das Trägerprofilelement (817) hineinragt, wobei die Leistungselektronik (819) in einem Einbauraum des Trägerprofilelements angeordnet ist, und dass das Trägerprofilelement (817) an zwei sich gegenüberliegenden Längsenden jeweils eine Öffnung (903, 1005) aufweist, in welche jeweils eine Kontaktierungsleiterplatte eingeschoben werden kann.

2. Lineares Transportsystem (801) nach Anspruch 1,
wobei hinter der einen Öffnung (1005) des Trägerprofilelements (817) ein aus mehreren Federkontakten bestehender Stecker angeordnet ist, um eine eingeschobene Kontaktierungsleiterplatte (905) in Position zu halten und zu kontaktieren.

3. Lineares Transportsystem (801) nach Anspruch 1 oder 2, wobei der Magnetfelderzeuger (103, 707; 709) eine Spule (307, 709) und einen Statorzahn (401, 501, 707) als Kern umfasst, um welchen die Spule (307, 709) gewickelt ist, und
wobei die Statorvorrichtung (101, 301, 701, 803) eine zweite Halteeinrichtung (705, 807) zum Halten des Magnetfelderzeugers (103, 707; 709) aufweist, an welcher der Magnetfelderzeuger (103, 707; 709) befestigt ist, wobei der Magnetfelderzeuger (103, 707; 709) zwischen den beiden Halteeinrichtungen angeordnet ist.

4. Lineares Transportsystem (801) nach Anspruch 3, wobei die erste Halteeinrichtung (105, 303, 703, 805) und die zweite Halteeinrichtung (705, 807) eine erste Aussparung (305, 603) bzw. eine zweite Aussparung (305, 603) aufweisen, in welche ein erster Halteabschnitt bzw. ein zweiter Halteabschnitt des Magnetfelderzeugers (103, 707; 709) gesteckt und fixiert ist.

5. Lineares Transportsystem (801) nach Anspruch 3 oder 4,
wobei mehrere voneinander beabstandete Magnetfelderzeuger (103, 707; 709) gebildet sind, und
wobei zwischen zwei Magnetfelderzeugern (103, 707; 709) jeweils ein ungewickelter Statorzahn (401, 501, 707) vorgesehen ist.

6. Lineares Transportsystem (801) nach einem der Ansprüche 3 bis 5, wobei die zweite Halteeinrichtung (705, 807) als eine Leiterplatte (303, 601, 703, 705, 805, 807) für eine elektrische Kontaktierung des Magnetfelderzeugers (103, 707; 709) gebildet ist.

7. Lineares Transportsystem (801) nach einem der vorherigen Ansprüche, wobei das Material der Leiterplatte (303, 601, 703, 705, 805, 807) ein faserverstärkter Kunststoff ist.

8. Lineares Transportsystem (801) nach einem der vorherigen Ansprüche, wobei ein Parameterspeicher für Ansteuerparameter des Magnetfelderzeugers (103, 707; 709) vorgesehen ist.

9. Lineares Transportsystem (801) nach einem der vorherigen Ansprüche, wobei ein thermischer Energieabführer zum Abführen von mittels des Magnetfelderzeugers (103, 707; 709) im Betrieb gebildeter thermischer Energie gebildet ist.

10. Lineares Transportsystem (801) nach einem der vorherigen Ansprüche, wobei eine Aufnahmeeinrichtung (811) zur Befestigung einer Führung (831) zum Führen eines Fahrzeugs gebildet ist.

11. Lineares Transportsystem (801) nach einem der vorherigen Ansprüche, wobei ein Träger (901, 1201) für ein Fahrzeug (829) vorgesehen ist, wobei der Träger (901, 1201) ein Reaktionsteil umfasst, welches ausgebildet ist, mit dem mittels des Magnetfelderzeugers (103, 707; 709) der Statorvorrichtung (101, 301, 701, 803) gebildeten Magnetfeld wechselzuwirken.

12. Lineares Transportsystem (801) nach Anspruch 11, wobei das Reaktionsteil zumindest einen Permanentmagneten (1609) umfasst.

13. Lineares Transportsystem (801) nach Anspruch 12, wobei der Träger (901, 1201) zwei gegenüberliegende Endbereiche (1603, 1605) und einen dazwischen angeordneten mittigen Bereich (1607) aufweist, in welchen jeweils zumindest ein Permanentmagnet (1609) angeordnet ist, wobei jeweils zwischen den Endbereichen (1603, 1605) und dem mittigen Bereich (1607) ein magnetloser Zwischenbereich vorgesehen ist.

14. Lineares Transportsystem (801) nach Anspruch 11, wobei das Reaktionsteil ein weichmagnetisches Material umfasst.

15. Gesamtsystem mit wenigstens zwei linearen Transportsystemen nach einem der vorherigen Ansprüche, die in Längsrichtung nebeneinander an einem Halteprofil befestigt sind, wobei durch eine Kontaktierungsleiterplatte die zwei linearen Transportsysteme miteinander kontaktiert werden, wobei eine Anschlussleitung zur Spannungsversorgung und zur Verbindung mit einer übergeordneten Steuerung des Gesamtsystems vorgesehen ist.

## Claims

1. Linear transport system (801)
having a stator apparatus (101, 301, 701, 803) for a linear motor, which stator apparatus has a magnetic field generator (103, 707; 709), to which electric current can be supplied, for forming a magnetic field, and
a first holding device (105, 303, 703, 805) for holding the magnetic field generator (103, 707; 709),
wherein the magnetic field generator (103, 707; 709) is fastened to the first holding device (105, 303, 703, 805),
wherein the first holding device (105, 303, 703, 805) is formed at least partially from an electrically nonconductive and/or magnetically impermeable material, and
wherein the first holding device (105, 303, 703, 805) is formed as a printed circuit board (303, 601, 703, 705, 805, 807) for making electrical contact with the magnetic field generator (103, 707; 709), and
having a carrier profile element (817),
**characterized**
**in that** the first holding device (303, 601, 703, 805) has a power electronics system (819) for actuating the magnetic field generator (103, 707; 709), wherein the first holding device, which is in the form of a printed circuit board, projects into the carrier profile element (817), wherein the power electronics system (819) is arranged in an installation space in the carrier profile element, and
**in that** the carrier profile element (817) has in each case one opening (903, 1005) at two opposite longitudinal ends, it being possible for in each case one contact-making printed circuit board to be inserted into the said openings.

2. Linear transport system (801) according to Claim 1,
wherein a plug which comprises a plurality of spring contacts is arranged behind the one opening (1005) in the carrier profile element (817) in order to hold in position and to make contact with an inserted contact-making printed circuit board (905).

3. Linear transport system (801) according to Claim 1 or 2,
wherein the magnetic field generator (103, 707; 709) comprises a coil (307, 709) and a stator tooth (401, 501, 707) as a core around which the coil (307, 709) is wound, and
wherein the stator apparatus (101, 301, 701, 803) has a second holding device (705, 807) for holding the magnetic field generator (103, 707; 709) to which second holding device the magnetic field generator (103, 707; 709) is fastened, wherein the magnetic field generator (103, 707; 709) is arranged between the two holding devices.

4. Linear transport system (801) according to Claim 3, wherein the first holding device (105, 303, 703, 805) and the second holding device (705, 807) have a first cutout (305, 603) and, respectively, a second cutout (305, 603) into which a first holding section and, respectively, a second holding section of the magnetic field generator (103, 707; 709) is inserted and fixed.

5. Linear transport system (801) according to Claim 3 or 4,
wherein a plurality of magnetic field generators (103, 707; 709) which are spaced apart from one another are formed, and
wherein in each case one non-wound stator tooth (401, 501, 707) is provided between two magnetic field generators (103, 707; 709).

6. Linear transport system (801) according to one of Claims 3 to 5, wherein the second holding device (705, 807) is formed as a printed circuit board (303, 601, 703, 705, 805, 807) for making electrical contact with the magnetic field generator (103, 707; 709).

7. Linear transport system (801) according to one of the preceding claims, wherein the material of the printed circuit board (303, 601, 703, 705, 805, 807) is a fibre-reinforced plastic.

8. Linear transport system (801) according to one of the preceding claims, wherein a parameter memory for actuating parameters of the magnetic field generator (103, 707; 709) is provided.

9. Linear transport system (801) according to one of the preceding claims, wherein a thermal energy discharge means for discharging thermal energy which is formed by means of the magnetic field generator (103, 707; 709) during operation is formed.

10. Linear transport system (801) according to one of the preceding claims, wherein a receiving device (811) for fastening a guide (831) for guiding a vehicle is formed.

11. Linear transport system (801) according to one of the preceding claims, wherein a carrier (901, 1201) for a vehicle (829) is provided, wherein the carrier (901, 1201) comprises a reaction part which is designed to interact with the magnetic field which is formed by means of the magnetic field generator (103, 707; 709) of the stator apparatus (101, 301, 701, 803).

12. Linear transport system (801) according to Claim 11, wherein the reaction part comprises at least one permanent magnet (1609).

13. Linear transport system (801) according to Claim 12, wherein the carrier (901, 1201) has two opposite end regions (1603, 1605) and a central region (1607) which is arranged between them and in which in each case at least one permanent magnet (1609) is arranged, wherein a magnet-free intermediate region is provided in each case between the end regions (1603, 1605) and the central region (1607).

14. Linear transport system (801) according to Claim 11, wherein the reaction part comprises a soft-magnetic material.

15. Complete system having at least two linear transport systems according to one of the preceding claims, which transport systems are fastened to a holding profile next to one another in the longitudinal direction, wherein contact is established between the two linear transport systems by a contact-making printed circuit board, wherein a connection line is provided for supplying power and for connection to a superordinate controller of the complete system.

## Revendications

1. Système de transport linéaire (801)
comportant un dispositif de stator (101, 301, 701, 803) destiné à un moteur linéaire, comprenant
un générateur de champ magnétique (103, 707 ; 709) pouvant être alimenté en courant électrique afin de créer un champ magnétique, et
un premier dispositif de maintien (105, 303, 703, 805) destiné à maintenir le générateur de champ magnétique (103, 707 ; 709),
dans lequel le générateur de champ magnétique (103, 707 ; 709) est fixé au premier dispositif de maintien (105, 303, 703, 805),
dans lequel le premier dispositif de maintien (105, 303, 703, 805) est au moins partiellement réalisé à partir d'un matériau non électriquement et/ou non magnétiquement conducteur, et
dans lequel le premier dispositif de maintien (105, 303, 703, 805) est réalisé sous la forme d'un circuit imprimé (303, 601, 703, 705, 805, 807) destiné à une mise en contact électrique du générateur de champ magnétique (103, 707 ; 709), et
comportant un élément de profil de support (817), **caractérisé en ce que** le premier dispositif de maintien (303, 601, 703, 805) comprend une électronique de puissance (819) destinée à commander le générateur de champ magnétique (103, 707 ; 709), dans lequel le premier dispositif de maintien réalisé sous la forme d'un circuit imprimé pénètre dans l'élément de profil de support (817), dans lequel l'électronique de puissance (819) est disposée dans un espace de montage de l'élément de profil de support, et **en ce que** l'élément de profil de support (817) présente à deux extrémités longitudinales opposées une ouverture respective (903, 1005) dans laquelle un circuit imprimé de mise en contact respectif peut être inséré.

2. Système de transport linéaire (801) selon la revendication 1,
dans lequel à l'arrière de l'une des ouvertures (1005) de l'élément de profil de support (817) est disposé un connecteur constitué d'une pluralité de contacts à ressorts, afin de maintenir en position et de mettre en contact un circuit imprimé (905) de mise en contact inséré.

3. Système de transport linéaire (801) selon la revendication 1 ou 2, dans lequel le générateur de champ magnétique (103, 707 ; 709) comprend une bobine (307, 709) et une dent de stator (401, 501, 707), en tant que noyau, autour de laquelle est enroulée la bobine (307, 709), et
dans lequel le dispositif de stator (101, 301, 701, 803) comporte un second dispositif de maintien (705, 807) destiné à maintenir le générateur de champ magnétique (103, 707 ; 709) sur lequel est fixé le générateur de champ magnétique (103, 707 ; 709), dans lequel le générateur de champ magnétique (103, 707 ; 709) est disposé entre les deux dispositifs de maintien.

4. Système de transport linéaire (801) selon la revendication 3, dans lequel le premier dispositif de maintien (105, 303, 703, 805) et le second dispositif de maintien (705, 807) comprennent respectivement un premier évidement (305, 603) et un second évidement (305, 603) dans lesquels une première section de maintien et une seconde section de maintien du générateur de champ magnétique (103, 707 ; 709) sont respectivement enfichées et fixées.

5. Système de transport linéaire (801) selon la revendication 3 ou 4,
dans lequel une pluralité de générateurs de champ magnétique (103, 707 ; 709) espacé les uns des autres sont formés, et
dans lequel il est prévu entre deux générateurs de champ magnétique (103, 707 ; 709) une dent de stator respective non enroulée (401, 501, 707).

6. Système de transport linéaire (801) selon l'une quelconque des revendications 3 à 5, dans lequel le second dispositif de maintien (705, 807) est réalisé sous la forme d'un circuit imprimé (303, 601, 703, 705, 805, 807) destiné à une mise en contact électrique du générateur de champ magnétique (103, 707 ; 709).

7. Système de transport linéaire (801) selon l'une quelconque des revendications précédentes, dans lequel le matériau du circuit imprimé (303, 601, 703, 705, 805, 807) est une matière plastique renforcée par des fibres.

8. Système de transport linéaire (801) selon l'une quelconque des revendications précédentes, dans lequel il est prévu une mémoire de paramètres destinée à des paramètres de commande du générateur de champ magnétique (103, 707 ; 709).

9. Système de transport linéaire (801) selon l'une quelconque des revendications précédentes, dans lequel un dispositif d'évacuation d'énergie thermique est formé pour évacuer l'énergie thermique dégagée au moyen du générateur de champ magnétique (103, 707 ; 709) lors de son fonctionnement.

10. Système de transport linéaire (801) selon l'une quelconque des revendications précédentes, dans lequel un dispositif de réception (811) est formé de manière à fixer un système de direction (831) destiné à diriger un véhicule.

11. Système de transport linéaire (801) selon l'une quelconque des revendications précédentes, dans lequel il est prévu un support (901, 1201) destiné à un véhicule (829), dans lequel le support (901, 1201) comprend une partie de réaction qui est conçue pour interagir avec le champ magnétique créé au moyen du générateur de champ magnétique (103, 707 ; 709) du dispositif de stator (101, 301, 701, 803).

12. Système de transport linéaire (801) selon la revendication 11, dans lequel la partie de réaction comprend au moins un aimant permanent (1609).

13. Système de transport linéaire (801) selon la revendication 12, dans lequel le support (901, 1201) comprend deux régions d'extrémité opposées (1603, 1605) et une région centrale (1607) disposée entre celles-ci, dans laquelle est disposé au moins un aimant permanent (1609) respectif, dans lequel il est prévu à chaque fois une région intermédiaire sans aimant entre les régions d'extrémité (1603, 1605) et la région centrale (1607).

14. Système de transport linéaire (801) selon la revendication 11, dans lequel la partie de réaction comprend un matériau magnétique doux.

15. Système global comportant au moins deux systèmes de transport linéaire selon l'une quelconque des revendications précédentes, qui sont fixés côte à côte dans la direction longitudinale à un profil de maintien, dans lequel les deux systèmes de transport linéaire sont mis en contact l'un avec l'autre par l'intermédiaire d'un circuit imprimé de mise en contact, dans lequel il est prévu un conducteur de raccordement destiné à l'alimentation en tension et à la connexion à une unité de commande maîtresse du système global.
